# EUROPEAN PATENT APPLICATION

(11) **EP 3 782 888 A1**
(43) Date of publication of application: **24.02.2021**
(21) Application number: 20190602.1
(22) Date of filing: 12.08.2020
(51) Int. Cl.: B62J 17/02

(54) **STRADDLED VEHICLE**

(30) Priority: 21.08.2019 JP 2019150945
(71) Applicant: Yamaha Hatsudoki Kabushiki Kaisha, Iwata-shi, Shizuoka-ken 438-8501 (JP)
(72) Inventor: TSAI, Cheng-Ting, 320 Taoyuan City (TW); CHIEN, I-Lun, 320 Taoyuan City (TW)
(74) Representative: Grünecker Patent- und Rechtsanwälte PartG mbB

(57) **Abstract**

A left side cover lower left portion (101) of a left side cover (101L, 101, 937, 938) and a right side cover lower right portion (101) of a right side cover (101R, 101, 938, S1) respectively include a left shielding cover portion (101) and a right shielding cover portion (101). A left shielding cover recess portion (101R, 101) of the left shielding cover portion (101) and a right shielding cover recess portion (101) of the right shielding cover portion (101) respectively have the shapes recessed toward the rear of the vehicle as seen in the vehicle side view and are arranged facing forward of the vehicle. A left reinforcement cover (1030, 103) includes a left reinforcement cover recess portion (10301, 10302, 1030, 104) that is positioned further to the rear than the left shielding cover recess portion (101R, 101) as seen in the vehicle left side view and is recessed toward the front of the vehicle as seen in the vehicle left side view. A right reinforcement cover (1040, 104) 104 includes a right reinforcement cover recess portion (10401, 10402, 1040, 11) that is positioned further to the rear than the right shielding cover recess portion (101) as seen in the vehicle right side view and is recessed toward the front of the vehicle as seen in the vehicle right side view. At least portions of the left reinforcement cover recess portion (10301, 10302, 1030, 104) and the right reinforcement cover recess portion (10401, 10402, 1040, 11) respectively overlap the left side cover lower left portion (101) and the right side cover lower right portion (101) as seen in the respective vehicle side views.

## Description

The present invention relates to a straddled vehicle and in particular relates to a front portion of a straddled vehicle.

A straddled vehicle has been known conventionally in which a front cover unit is provided in front of the legs of a driver sitting on a seat. For example, in the straddled vehicle described in JP 2013-203082 A, a front cover unit 913 is provided in front of a seat 906 as illustrated in fig. 16(a)-(b). The front cover unit 913 includes a leg shield 932 that is arranged behind a head pipe 902, and a front cover 934 that is arranged in front of the leg shield 932 and is connected to the leg shield 932. The front cover 934 includes: an upper cover 935 that is arranged in front of the head pipe 902 and above a front wheel 905 as seen in the vehicle front view; an inner cover 936 that is arranged below the upper cover 935 and behind the front wheel 905 and connected to a lower edge portion of the upper cover 935; a left side cover 937 that is arranged further to the left in the vehicle left-right direction than the front wheel 905 and is connected to a left edge portion of the upper cover 935 as seen in the vehicle front view; and a right side cover 938 that is arranged further to the right in the vehicle left-right direction than the front wheel 905 and is connected to a right edge portion of the upper cover 935 as seen in the vehicle front view.

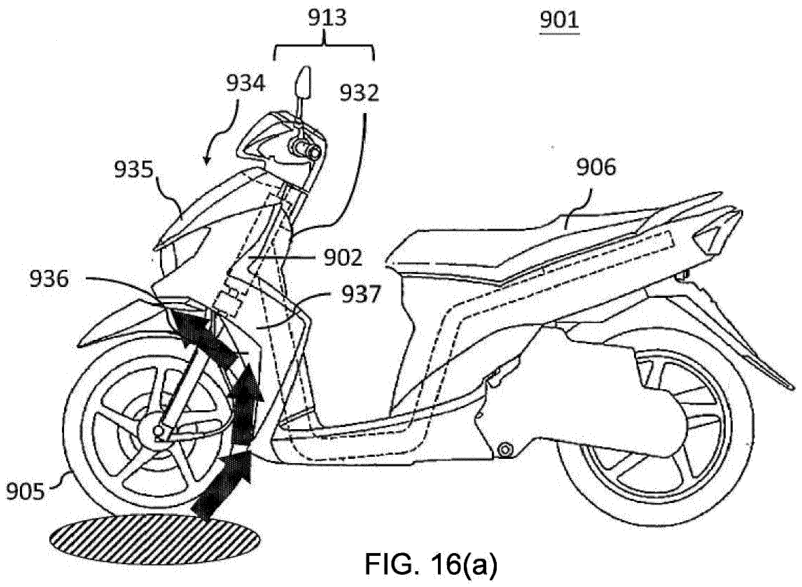

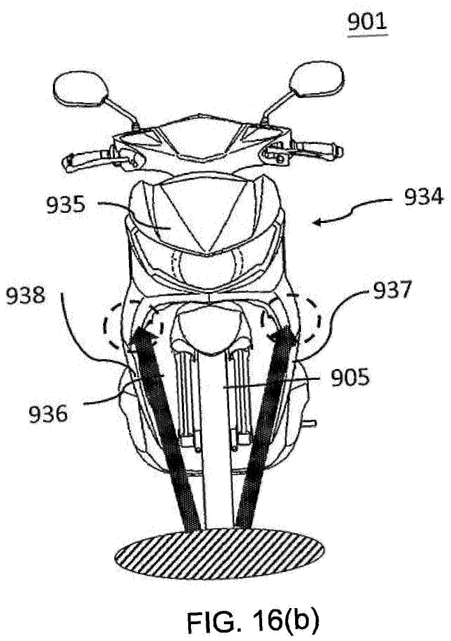

When the straddled vehicle is traveling after it has rained, muddy water from puddles on the road surface is scattered by the movement of the front wheel 905. For example, muddy water may be splashed upward from the front wheel 905 (fig. 16(a)) or muddy water may be scattered due to the impact of the front wheel 905 entering a puddle (fig. 16(b)). The straddled vehicle is able to block the muddy water that is scattered due to the movement of the front wheel 905 with the inner cover 936 and the left and right side covers 937, 938 of the front cover 934. However, the respective outer surfaces facing forward of the vehicle of the left and right side covers 937, 938 are formed in a manner of extending outward in the vehicle width direction and rearward from the front of the vehicle. Therefore, muddy water that adheres to the outer surfaces of the left and right side covers 937, 938 when the straddled vehicle is traveling flows along the outer surface of the left and right side covers 937, 938 and toward the rear due to the air flow produced when traveling. As a result, the muddy water may separate from the rear edges of the left and right side covers 937, 938 and fall onto the legs of the driver.

The present invention considers the above situation and an object of the present invention is to provide a straddled vehicle with which it is difficult for muddy water scattered by the movement of the front wheel to fall onto the legs of the driver.

According to the present invention said object is solved by a straddled vehicle having the features of independent claim 1. Preferred embodiments are laid down in the dependent claims.

As indicated above, the cause of the problem of muddy water falling onto the legs of the driver is that muddy water adhered to the left and right side covers of the front cover flows along the outer surfaces facing forward of the vehicle of the left and right side covers and flows to the rear of the vehicle due to the air flow produced when traveling. As a result, it has been considered to reduce the amount of muddy water adhering to the outer surfaces by reducing the surface area of the outer surfaces of the right and left side covers in the vehicle width direction and by reducing as much as possible the amount of muddy water blocked by the outer surfaces of the right and left side covers. However, when the surface area of the outer surfaces of the right and left side covers is reduced, the muddy water scattered by the movement of the front wheel is scattered directly onto the legs of the driver.

Accordingly, the shape of the outer surfaces of the right and left side covers to form left and right side covers that respectively include left and right shielding cover portions which have the shapes being difficult for the muddy water to flow toward the rear of the vehicle may be considered. That is, left and right side covers were formed in the manner of including left and right shielding cover portions on the outer surfaces facing forward of the vehicle of the left and right side covers. The muddy water scattered by the movement of the front wheel is blocked by the left and right shielding cover portions and stopped on the left and right shielding cover portions whereby it becomes difficult for the muddy water to flow toward the rear of the vehicle.

However, when the left and right side covers are formed in a manner of including the left and right shielding cover portions on the outer surfaces facing forward of the vehicle of the left and right side covers, external forces increase due to the muddy water and the traveling wind received by the left and right shielding cover portions. As a result, there is a concern that the coupling rigidity between the front cover and the leg shield may be insufficient and the front cover and the leg shield may shift easily due to the external forces received by the left and right shielding cover portions.

On the other hand, it may be noticed that the problem pertaining to muddy water falling onto the legs of the driver after the rain has stopped can be resolved by improving the shape of the portions of the left and right side covers that tend to receive the muddy water scattered by the movement of the front wheel, that is, improving the shapes of the portions of the left and right side covers at positions below a virtual horizontal line that passes through the sitting surface of the seat. That is, the problem pertaining to muddy water falling onto the legs of the driver after the rain has stopped can be resolved by merely forming the left and right shielding cover portions on the portions of the left and right side covers in the positions below the virtual horizontal line that passes through the sitting surface of the seat.

In addition, if the left and right shielding cover portions are formed on the portions of the left and right side covers in the positions below the virtual horizontal line that passes through the sitting surface of the seat, and if the upper portions of the left and right side covers above the virtual horizontal line that passes through the sitting surface of the seat are formed to be narrower in the vehicle width direction in comparison to the lower portions which are positioned below the virtual horizontal line that passes through the sitting surface of the seat, the surface area of the left and right side covers can be reduced in comparison to when the overall width of the left and right side covers is increased in the vehicle width direction. As a result, the external force produced by the traveling wind received by the left and right shielding covers is reduced and the problem of the front cover and the leg shield shifting easily can be resolved.

In addition, it may be considered forming left and right reinforcement covers separately from the front cover in order to further limit the amount of shifting of the front cover and the leg shield. More specifically, at least portions of the left and right reinforcement covers are formed in a manner of being recessed toward the front and the left and right reinforcement covers are arranged in a manner of being inserted into the left and right side covers from the rear of the left and right side covers, whereby movement of the front covers can be restricted by the left and right reinforcement covers. As a result, shifting of the front cover and the leg shield can be suppressed.

In addition, because the shifting of the front cover and the leg shield can be sufficiently suppressed, it has been considered to improve the shapes of left and right shielding covers which are capable of further improving the suppressing effect of the muddy water without worrying about the shifting of the front cover and the leg shield. As a result, stopping the muddy water in a recessed portion is better than on a flat surface. As a result, if at least portions of the respective left and right shielding cover portions are formed in a manner of being recessed toward the rear, the effect of suppressing muddy water from flowing toward the rear of the vehicle can be improved even more. As a result, it is possible to make it more difficult for the muddy water to be transmitted toward the rear and more difficult for the muddy water to fall onto the legs of the driver. Therefore, the flow of the muddy water toward the rear of the vehicle can be sufficiently suppressed even without increasing the size the left and right shielding cover portions.

A straddled vehicle of a first embodiment includes a head pipe, a pair of left and right front forks, a front wheel, a seat, and a front cover unit. The pair of left and right front forks are rotatably provided to the head pipe. The front wheel is rotatably supported by the pair of left and right front forks. The seat is arranged further to the rear of the vehicle than the head pipe and includes a sitting surface on which the driver sits. The front cover unit is arranged further to the front than the seat. The front cover unit includes a leg shield arranged further to the rear than the head pipe, a front cover, a left reinforcement cover, and a right reinforcement cover. The front cover is arranged further to the front than the leg shield and is connected to the leg shield. The front cover includes an upper cover, an inner cover, a left side cover, and a right side cover. The upper cover is arranged further to the front than the head pipe and above the front wheel as seen in the vehicle front view. The inner cover is arranged below the upper cover and further to the rear than the front wheel, and is connected to a lower edge portion of the upper cover. The left side cover is arranged further to the left in the vehicle left-right direction than the front wheel as seen in the vehicle front view, and is connected to a left edge portion of the upper cover. The right side cover is arranged further to the right in the vehicle left-right direction than the front wheel as seen in the vehicle front view, and is connected to a right edge portion of the upper cover. The left side cover includes a left side cover upper left portion and a left side cover lower left portion. The left side cover upper left portion is positioned above a virtual horizontal line that passes through the sitting surface of the seat as seen in the vehicle left side view. The left side cover lower left portion is positioned below the virtual horizontal line as seen in the vehicle left side view. The left side cover lower left portion includes a lower left upper surface portion and a lower left side surface portion. The lower left upper surface portion extends further to the outside in the vehicle width direction than a lower end of a left edge portion of the left side cover upper left portion as seen in the vehicle front view. The lower left side surface portion extends downward in the vehicle up-down direction from an outer end portion of the lower left upper surface portion as seen in the vehicle front view. The right side cover includes a right side cover upper right portion and a right side cover lower right portion. The right side cover upper right portion is positioned above the virtual horizontal line that passes through the sitting surface of the seat as seen in the vehicle right side view. The right side cover lower right portion is positioned below the virtual horizontal line as seen in the vehicle right side view. The right side cover lower right portion includes a lower right upper surface portion and a lower right side surface portion. The lower right upper surface portion extends further to the outside in the vehicle width direction than a lower end of a right edge portion of the right side cover upper right portion as seen in the vehicle front view. The lower right side surface portion extends downward in the vehicle up-down direction from an outer end portion of the lower right upper surface portion as seen in the vehicle front view. The left side cover lower left portion further includes a left shielding cover portion. At least a portion of the left shielding cover portion is positioned further to the left in the vehicle left-right direction than a left edge portion of the left side cover upper left portion. The right side cover lower right portion further includes a right shielding cover portion. At least a portion of the right shielding cover portion is positioned further to the right in the vehicle left-right direction than a right edge portion of the right side cover upper right portion. The left shielding cover portion includes a left shielding cover recess portion. The left shielding cover recess portion has the shape recessed toward the rear of the vehicle as seen in the vehicle left side view and is arranged facing forward of the vehicle. The right shielding cover portion includes a right shielding cover recess portion. The right shielding cover recess portion has the shape recessed toward the rear of the vehicle as seen in the vehicle right side view and is arranged facing forward of the vehicle. The left reinforcement cover is arranged separately from the front cover and is positioned further to the left in the vehicle left-right direction than the left edge portion of the left side cover upper left portion. The right reinforcement cover is arranged separately from the front cover and is positioned further to the right in the vehicle left-right direction than the right edge portion of the right side cover upper right portion. The left reinforcement cover includes a left reinforcement cover recess portion that is positioned further to the rear than the left shielding cover recess portion as seen in the vehicle left side view and is recessed toward the front of the vehicle as seen in the vehicle left side view. At least a portion of the left reinforcement cover recess portion overlaps the left side cover lower left portion as seen in the vehicle plan view. At least a portion of the left reinforcement cover recess portion overlaps the left side cover lower left portion as seen in the vehicle left side view. The right reinforcement cover includes a right reinforcement cover recess portion that is positioned further to the rear than the right shielding cover recess portion as seen in the vehicle right side view and is recessed toward the front of the vehicle as seen in the vehicle right side view. At least a portion of the right reinforcement cover recess portion overlaps the right side cover lower right portion as seen in the vehicle plan view. At least a portion of the right reinforcement cover recess portion overlaps the right side cover lower right portion as seen in the vehicle right side view.

As indicated above, in the straddled vehicle of the first embodiment, the left side cover lower left portion includes the left shielding cover portion at least a portion of which is positioned further to the left in the vehicle left-right direction than the left edge portion of the left side cover upper left portion. The right side cover lower right portion includes the right shielding cover portion at least a portion of which is positioned further to the right in the vehicle left-right direction than the right edge portion of the right side cover upper right portion. That is, in the straddled vehicle of the first embodiment, the left shielding cover portion and the right shielding cover portion are respectively formed on portions of the left and right side covers that tend to receive the muddy water scattered by the movement of the front wheel (namely, the left side cover lower left portion and the right side cover lower right portion). As a result, the muddy water scattered by the movement of the front wheel is blocked by the left and right shielding cover portions and stopped on the left and right shielding cover portions, and therefore it becomes difficult for the muddy water to flow toward the rear of the vehicle. Therefore, the effect of suppressing the muddy water scattered by the movement of the front wheel from falling onto the legs of the driver can be achieved. In addition, by forming the left and right shielding cover portions respectively on the portions of the left side cover lower left portion and the right side cover lower right portion in positions below the virtual horizontal line that passes through the sitting surface of the seat, the external force caused by the traveling wind received by the left and right shielding cover portions can be reduced. Therefore, by forming the left and right side covers that include the left and right shielding cover portions, the situation in which the coupling rigidity between the front cover and the leg shield is insufficient and the front cover and the leg shield tend to shift due to the external force received by the left and right shielding cover portions, does not occur even when the muddy water is blocked by the left and right shielding cover portions and the amount of muddy water flowing toward the rear of the vehicle is reduced.

In addition, in the straddled vehicle of the first embodiment, the left side cover lower left portion includes the lower left upper surface portion that extends to the outside in the vehicle width direction from the lower end of the left edge portion of the left side cover upper left portion as seen in the vehicle front view, and the lower left side surface portion that extends downward in the vehicle up-down direction from the outer end portion of the lower left upper surface portion as seen in the vehicle front view. The right side cover lower right portion includes the lower right upper surface portion that extends outward in the vehicle width direction from the lower end of the right edge portion of the right side cover upper right portion as seen in the vehicle front view, and the lower right side surface portion that extends downward in the vehicle up-down direction from the outer end portion of the lower right upper surface portion as seen in the vehicle front view. That is, in the straddled vehicle of the first embodiment, the left and right shielding cover portions are formed on the portions of the left and right side covers in the positions below the virtual horizontal line that passes through the sitting surface of the seat, and the left and right side covers are formed in a manner that the upper portions of the left and right side covers above the virtual horizontal line that passes through the sitting surface of the seat are formed to be narrower in the vehicle width direction in comparison to the lower portions which are positioned below the virtual horizontal line that passes through the sitting surface of the seat. As a result, in comparison to forming the left and right shielding cover portions on the portions of the left and right side covers up to a position higher than the virtual horizontal line that passes through the sitting surface of the seat, by forming the left and right shielding cover portions on the respective left side cover lower left portion and the right side cover lower right portion, in addition to the external force due to the traveling wind received by the left and right shielding cover portions being reduced, the surface area of the upper portions of the left and right side covers impacted by the traveling wind is reduced in comparison to when the entirety of the left and right side covers is wider in the vehicle width direction. Consequently, the external force due to the traveling wind received by the left and right shielding cover portions is reduced and the suppression of the shifting of the front cover and the leg shield can be further improved.

Furthermore, in the straddled vehicle of the first embodiment, the left reinforcement cover is arranged separately from the front cover and is positioned further to the left in the vehicle left-right direction than the left edge portion of the left side cover upper left portion. The left reinforcement cover includes the left reinforcement cover recess portion that is recessed toward the front of the vehicle as seen in the vehicle left side view, and at least a portion of the left reinforcement cover recess portion overlaps the left side cover lower left portion as seen in the vehicle plan view, and at least a portion of the left reinforcement cover recess portion overlaps the left side cover lower left portion as seen in the vehicle left side view. The right reinforcement cover is arranged separately from the front cover and is positioned further to the right in the vehicle left-right direction than the right edge portion of the right side cover upper right portion. The right reinforcement cover includes the right reinforcement cover recess portion that is recessed toward the front of the vehicle as seen in the vehicle right side view, and at least a portion of the right reinforcement cover recess portion overlaps the right side cover lower right portion as seen in the vehicle plan view, and at least a portion of the right reinforcement cover recess portion overlaps the right side cover lower right portion as seen in the vehicle right side view. That is, in the straddled vehicle of the first embodiment, the left and right reinforcement covers respectively include the left and right reinforcement cover recess portions that have the shape recessed toward the front, and are arranged in a manner of being inserted into the left and right side covers from the rear of the left and right side covers. Consequently, the left and right shielding cover portions are respectively formed on the left side cover lower left portion and the right side cover lower right portion, and the left side cover upper left portion and the right side cover upper right portion are respectively formed to be narrower in the vehicle width direction in comparison to the left side cover lower left portion and the right side cover lower right portion, whereby, in addition to reducing the external force caused by the traveling wind received by the left and right shielding cover portions, the movement of the front cover can be restricted by the left and right reinforcement covers. As a result, suppression of the shifting of the front cover and the leg shield can be further improved.

Furthermore, in the straddled vehicle of the first embodiment, the left shielding cover portion includes the left shielding cover recess portion which has the shape recessed toward the rear of the vehicle as seen in the vehicle left side view, and is arranged facing forward of the vehicle. The left reinforcement cover is positioned further to the rear than the left shielding cover recess portion as seen in the vehicle left side view. The right shielding cover portion includes the right shielding cover recess portion which has the shape recessed toward the rear of the vehicle as seen in the vehicle right side view, and is arranged facing forward of the vehicle. The right reinforcement cover is positioned further to the rear than the right shielding cover recess portion as seen in the vehicle right side view. That is, the left shielding cover recess portion and the right shielding cover recess portion are respectively formed on the left shielding cover portion and the right shielding cover portion, and the effect of stopping the muddy water is improved with the left shielding cover recess portion and the right shielding cover recess portion. As a result, the muddy water scattered by the movement of the front wheel is less likely to be transmitted to the rear, and muddy water falling on the legs of the driver can be made more difficult. Therefore, even if the size of the left and right shielding cover portions is not increased, the falling of the muddy water scattered by the movement of the front wheel onto the legs of the driver can be sufficiently prevented. As indicated above, the shifting of the front cover and the leg shield can be sufficiently suppressed due to the design of the shapes of the left side cover and the right side cover and the installation positions of the left shielding cover and the right shielding cover, and due to the installation of the left and right reinforcement covers. As a result, even when improving the shapes of the left and right shielding cover portions by respectively forming the left shielding cover recess portion and the right shielding cover recess portion on the left shielding cover portion and the right shielding cover portion so as to be able to further enhance the muddy water suppression effect, there is no concern with regard to the shifting of the front cover and the leg shield.

In this way, a straddled vehicle can be provided that, at the same time, can resolve the issue of preventing muddy water scattered by the movement of the front wheel from falling onto the legs of the driver and the issue of suppressing the shifting of the front cover and the leg shield.

In the straddled vehicle of the present teaching, a projected area of the left shielding cover portion as seen in the vehicle front view is preferably larger than a projected area of the left shielding cover portion as seen in the vehicle left side view. A projected area of the right shielding cover portion as seen in a vehicle front view is preferably larger than a projected area of the right shielding cover portion as seen in the vehicle right side view.

In this case, because the respective forward facing surface areas of the vehicle of the left shielding cover portion and the right shielding cover portion are large, the surface area for blocking the muddy water scattered by the movement of the front wheel is large. As a result, the muddy water scattered by the movement of the front wheel can be blocked and stopped on the left and right shielding cover portions by the left shielding cover portion and the right shielding cover portion, whereby the falling of muddy water scattered by the movement of the front wheel onto the legs of the driver can be further prevented.

In the straddled vehicle of the present teaching, the left shielding cover portion is preferably formed in a manner that a front edge portion thereof extends rearward and downward from the front of the vehicle as seen in the vehicle left side view. The right shielding cover portion is preferably formed in a manner that a front edge portion thereof extends rearward and downward from the front of the vehicle as seen in the vehicle right side view.

In this case, the respective front surfaces of the left and right shielding cover portions as seen in the respective vehicle side views are arranged facing forward and downward of the vehicle, whereby the muddy water scattered by the movement of the front wheel can be easily blocked. As a result, the falling of muddy water scattered by the movement of the front wheel onto the legs of the driver can be prevented even further. In addition, because the surface area impacted by the traveling wind is reduced, the external force caused by the traveling wind received by the left and right shielding cover portions is reduced and shifting of the front cover and the leg shield is more difficult.

In the straddled vehicle of the present teaching, the left shielding cover recess portion of the left shielding cover portion is preferably arranged facing forward and downward of the vehicle. The right shielding cover recess portion of the right shielding cover portion is preferably arranged facing forward and downward of the vehicle.

In this case, both of the left shielding cover recess portion of the left shielding cover portion and the right shielding cover recess portion of the right shielding cover portion are arranged facing forward and downward of the vehicle as seen in the respective vehicle side views, whereby the muddy water scattered by the movement of the front wheel can be easily blocked. As a result, the falling of muddy water scattered by the movement of the front wheel onto the legs of the driver can be prevented even further.

In the straddled vehicle of the present teaching, the left side cover upper left portion preferably includes an upper left upper surface portion that extends outward in the vehicle width direction as seen in the front view, and an upper left side surface portion that extends downward in the vehicle up-down direction from an outer end portion of the upper left upper surface portion. The right side cover upper right portion preferably includes an upper right upper surface portion that extends outward in the vehicle width direction as seen in the front view, and an upper right side surface portion that extends downward in the vehicle up-down direction from an outer end portion of the upper right upper surface portion. The upper left side surface portion is positioned further to the right in the vehicle left-right direction than the lower left side surface portion. The upper right side surface portion is positioned further to the left in the vehicle left-right direction than the lower right side surface portion.

In this case, the left side cover upper left portion is formed as a stepped shape recessed further to the inside in the vehicle width direction than the left side cover lower left portion, and the right side cover upper right portion is formed as a stepped shape recessed further to the inside in the vehicle width direction than the right side cover lower right portion. Consequently, the surface areas of the upper portions of the left and right side covers impacted by the traveling wind can be reduced. Consequently, the external force caused by the traveling wind received by the left and right shielding cover portions is reduced and the suppression of the shifting of the front cover and the leg shield can be further improved. In addition, the coupling portions of the front cover and the leg shield are longer in comparison to a shape that is not stepped as seen in the vehicle front view, and the coupling rigidity between the front cover and the leg shield can be further ensured. As a result, suppression of the shifting of the front cover and the leg shield can be further improved.

In the straddled vehicle of the present teaching, the left reinforcement cover is preferably provided integrally with the leg shield. The right reinforcement cover is preferably provided integrally with the leg shield.

In this case, the left and right reinforcement covers for suppressing the shifting of the front cover and the leg shield by restricting movement of the front cover, are provided on the leg shield, whereby the capacity for restricting the movement of the front cover can be improved because the attachment rigidity of the left and right reinforcement covers themselves can be improved. As a result, shifting of the front cover and the leg shield can be further suppressed.

In the straddled vehicle of the present teaching, at least a portion of the front edge portion of the left shielding cover portion is preferably positioned further to the right in the vehicle left-right direction than a vertical line that passes through a left end portion in the vehicle left-right direction of a fender cover arranged above the front wheel as seen in the vehicle front view. At least a portion of the front edge portion of the right shielding cover portion is preferably positioned further to the left in the vehicle left-right direction than a vertical line that passes through a right end portion in the vehicle left-right direction of the fender cover as seen in the vehicle front view.

In this case, at least portions of both the left shielding cover portion and the right shielding cover portion overlap the fender cover as seen in the vehicle front view. Consequently, the muddy water scattered by the movement of the front wheel can be blocked by the fender cover in addition to the left shielding cover portion and the right shielding cover portion, whereby the flow of muddy water to the rear can be further suppressed. As a result, the falling of muddy water onto the legs of the driver can be prevented even further.

### Brief Description of Drawings

FIG. 1 is a vehicle left side view of a straddled vehicle 1 while a driver is sitting thereon.
FIG. 2 is a vehicle right side view of the straddled vehicle 1.
FIG. 3 is a vehicle plan view of the straddled vehicle 1 with a handle 8 and covers around the handle removed.
FIG. 4 is a vehicle front view of the straddled vehicle 1.
FIG. 5 is a rear view of the vehicle body positioned in front of a footboard portion 13 in the straddled vehicle 1.
FIG. 6 is a vehicle left side view of the straddled vehicle 1 while a driver is sitting thereon with a left side reinforcement cover 15 and a right side reinforcement cover 16 removed.
FIG. 7 is a vehicle right side view of the straddled vehicle 1 with the left side reinforcement cover 15 and the right side reinforcement cover 16 removed.
FIG. 8 is a vehicle plan view of the straddled vehicle 1 with the handle 8, covers around the handle, the left side reinforcement cover 15, and the right side reinforcement cover 16 removed.
FIG. 9 is a vehicle front view of the straddled vehicle 1 with the left side reinforcement cover 15 and the right side reinforcement cover 16 removed.
FIG. 10 is a rear view of the vehicle body positioned in front of the footboard portion 13 in the straddled vehicle 1 with the left side reinforcement cover 15 and the right side reinforcement cover 16 removed.
FIG. 11 is an enlarged left side view of a portion of a front cover unit 10.
FIG. 12 is an enlarged right side view of a portion of the front cover unit 10.
FIG. 13 is a vehicle plan view of a front portion of the straddled vehicle 1.
FIG. 14 is an assembly view when viewing the front portion of the straddled vehicle 1 from a point to the left and in front and above the vehicle.
FIG. 15 is an assembly view when viewing the front portion of the straddled vehicle 1 from a point to the left and to the rear and above the vehicle.
FIG. 16(a) is a vehicle left side view of a straddled vehicle 901 described in JP 2013-203082 A.
FIG. 16(b) is a vehicle front view of the straddled vehicle 901 described in JP 2013-203082 A.

### Description of Embodiments

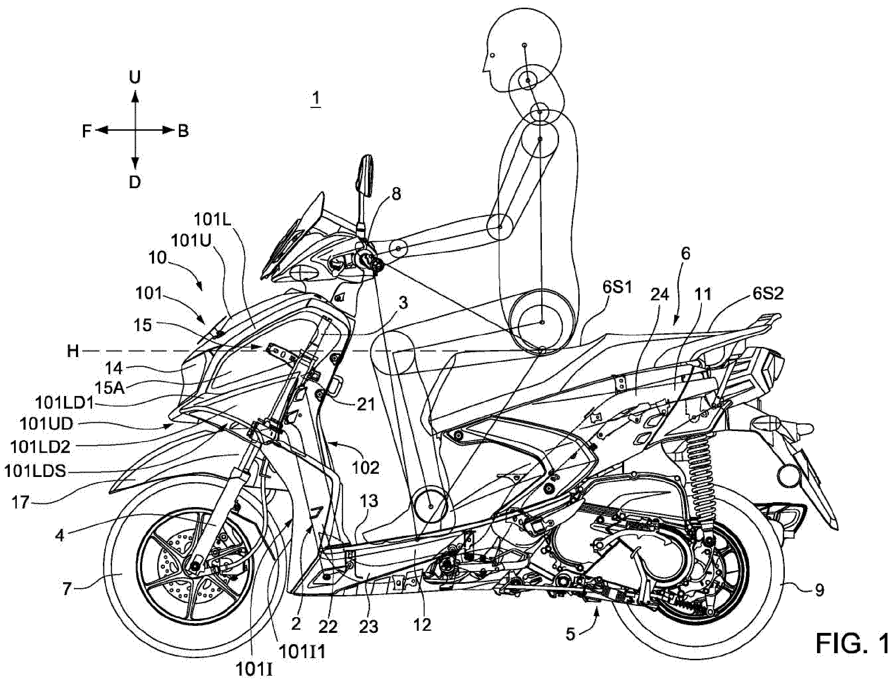

The embodiments described hereinbelow will be explained with reference to the drawings. As illustrated in FIG. 1, a straddled vehicle 1 applicable to the present embodiment is a scooter type vehicle. However, the straddled vehicle as in the present teaching is not limited to a scooter type vehicle and may be another type of straddled vehicle. The straddled vehicle is also not limited to a motorized two-wheel vehicle and may be a motorized three-wheel vehicle.

In the following explanation, forward, rearward, leftward, and rightward respectively signify toward the front, toward the rear, toward the left, and toward the right as seen from a passenger sitting on the straddled vehicle 1. The front-back direction is the same as the vehicle front-back direction and the left-right direction is the same as the vehicle left-right direction. In addition, the F-direction arrows and the B-direction arrows in the drawings respectively represent the forward direction and the rearward direction, the U-direction arrows and the D-direction arrows respectively represent the upward direction and the downward direction, and the L-direction arrows and the R-direction arrows respectively represent the leftward direction and the rightward direction.

Furthermore, in the following explanation, "left side cover upper left portion", "upper left upper surface portion", "upper left side surface portion", and "upper left coupling surface portion" respectively signify "the upper left portion of the left side cover", "the upper surface portion of the upper left portion of the left side cover", "the side surface portion of the upper left portion of the left side cover", and "the coupling surface portion of the upper left portion of the left side cover".

In addition, "left side cover lower left portion", "lower left upper surface portion", "lower left side surface portion", and "lower left coupling surface portion" respectively signify "the lower left portion of the left side cover", "the upper surface portion of the lower left portion of the left side cover", "the side surface portion of the lower left portion of the left side cover", and "the coupling surface portion of the lower left portion of the left side cover ".

In addition, "right side cover upper right portion", "upper right upper surface portion", "upper right side surface portion", and "upper right coupling surface portion" respectively signify "the upper right portion of the right side cover", "the upper surface portion of the upper right portion of the right side cover", "the side surface portion of the upper right portion of the right side cover", and "the coupling surface portion of the upper right portion of the right side cover".

In addition, "right side cover lower right portion", "lower right upper surface portion", "lower right side surface portion", and "lower right coupling surface portion" respectively signify "the lower right portion of the right side cover", "the upper surface portion of the lower right portion of the right side cover", "the side surface portion of the lower right portion of the right side cover", and "the coupling surface portion of the lower right portion of the right side cover".

### (Overall vehicle)

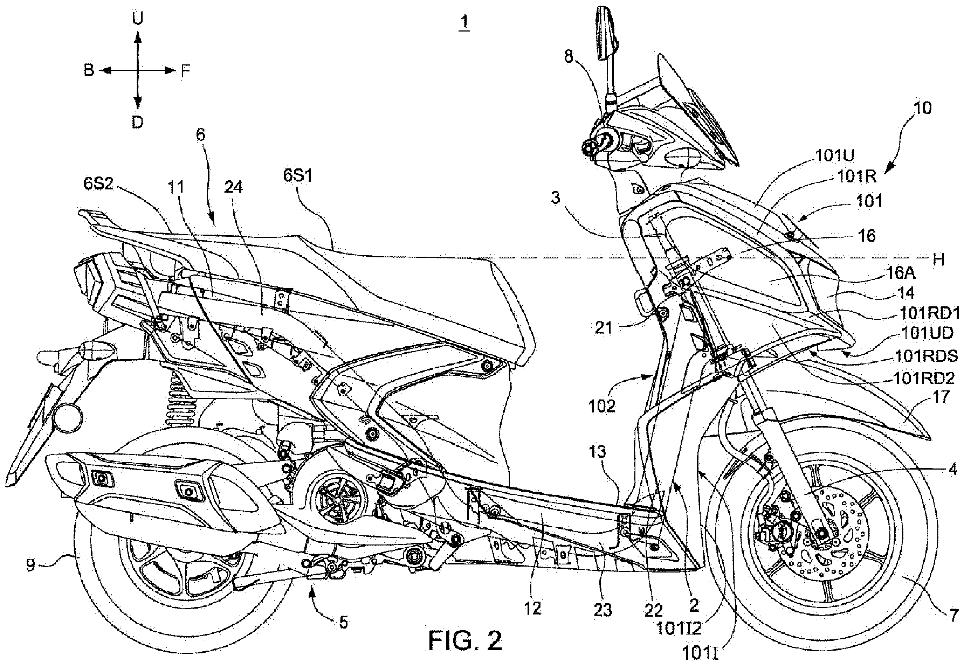

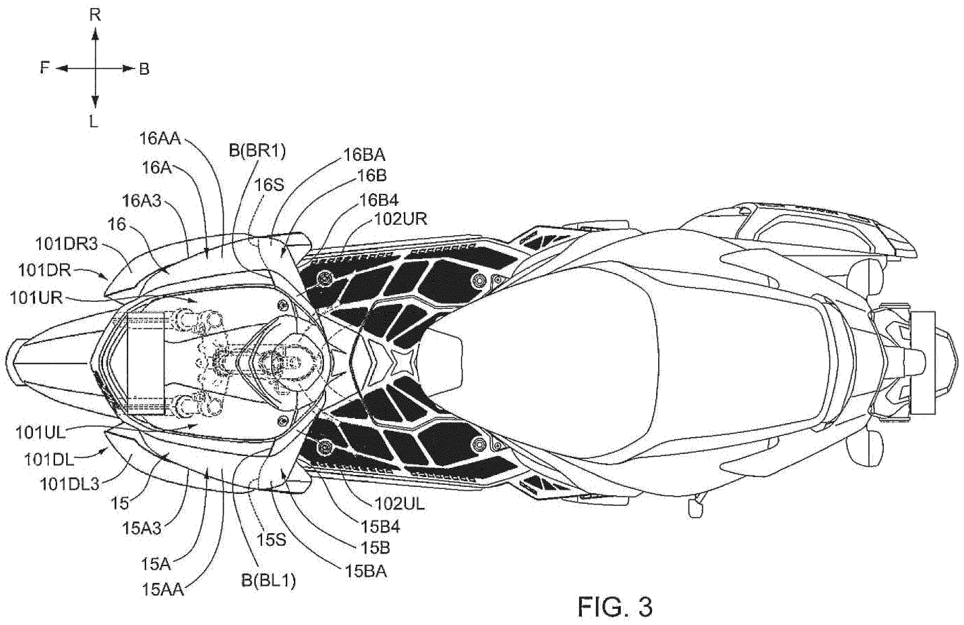

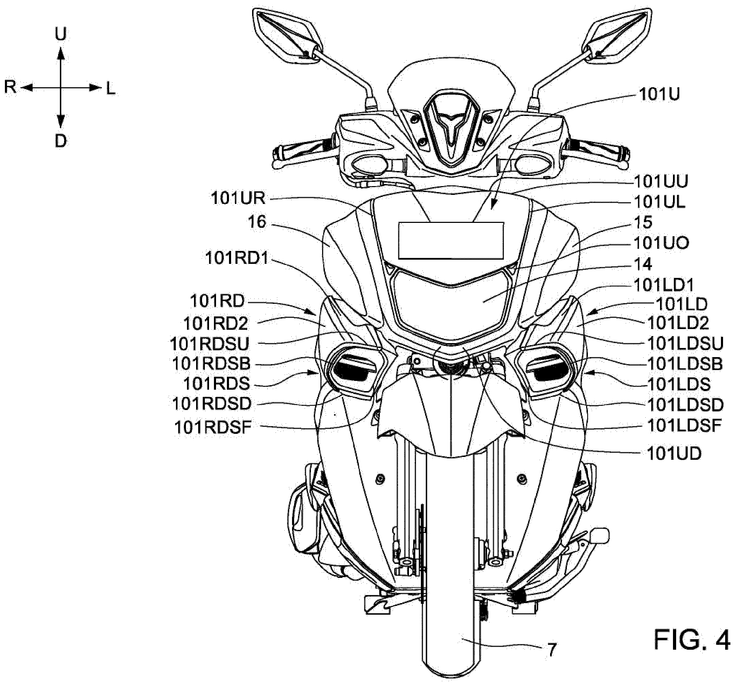

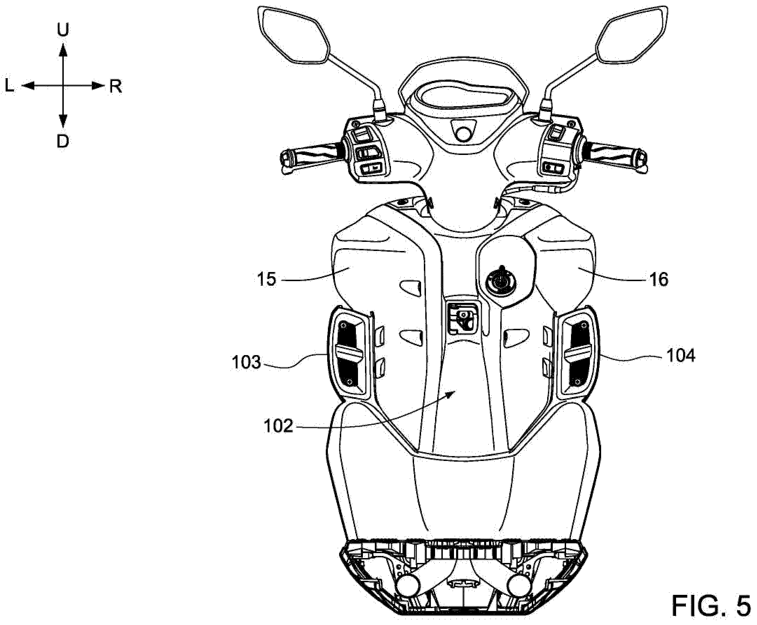

An overall structure of the straddled vehicle 1 of the present embodiment will be explained first with reference to FIG 1-5. FIG. 1 is a vehicle left side view of the straddled vehicle 1 while a driver is sitting thereon, FIG. 2 is a vehicle right side view of the straddled vehicle 1, FIG. 3 is a vehicle plan view of the straddled vehicle 1 with a handle 8 and covers around the handle removed, FIG. 4 is a vehicle front view of the straddled vehicle 1, and FIG. 5 is a rear view of the vehicle body positioned in front of a footboard portion 13 in the straddled vehicle 1. FIG. 1-3 depict portions such as a vehicle body frame 2 and a head pipe 21 of the vehicle internal structure with dotted lines.

As illustrated in FIG. 1 and 2, the straddled vehicle 1 includes the under-bone type vehicle body frame 2. A front end portion of the vehicle body frame 2 includes the head pipe 21. More specifically, the vehicle body frame 2 includes the head pipe 21, a down frame 22, a lower frame 23, and a rear frame 24.

The head pipe 21 is rotatably supported on a steering shaft 3 and extends diagonally downward toward the front of the vehicle. A pair of left and right front forks 4 are provided on a lower portion of the steering shaft 3. That is, the pair of left and right front forks 4 are rotatably supported on the head pipe 21. The head pipe 21 and the steering shaft 3 extend forward and diagonally downward. The pair of left and right front forks 4 extend forward and diagonally downward and a front wheel 7 is rotatably supported at the lower end of the pair of left and right front forks 4. That is, the front wheel 7 is rotatably supported by the pair of left and right front forks. The upper ends of the front forks 4 are attached to the aforementioned steering shaft 3. A handle 8 is arranged at the upper end of the steering shaft 3.

The down frame 22 is connected to the head pipe 21 and extends diagonally downward toward the rear of the vehicle and is positioned further to the rear than the front wheel 7. The lower frame 23 is connected to a lower portion of the down frame 22 and extends rearward. The rear frame 24 is connected to a rear portion of the lower frame 23 and extends rearward and upward, and supports a seat 6 from below. The rear frame 24 supports a power unit 5. The seat 6 is arranged above the power unit 5. A rear wheel 9 is arranged at the rear end portion of the power unit 5 and is rotatably supported by the rear end portion of the power unit 5. The rear wheel 9 is driven by the driving power from the power unit 5 .

The seat 6 is arranged further to the rear of the vehicle than the head pipe 21 and includes a sitting surface 6S1 on which the driver sits. The seat 6 includes a sitting surface 6S2 on which a rear seat passenger sits. The sitting surface 6S2 is arranged higher than the sitting surface 6S1.

As illustrated in FIG. 1 and 2, the straddled vehicle 1 includes a front cover unit 10 arranged further to the front than the seat 6. In addition, the straddled vehicle 1 includes a rear cover 11 and a lower cover 12.

As illustrated in FIG. 1 and 2, the front cover unit 10 includes a leg shield 102 that is arranged further to the rear than the head pipe 21, and a front cover 101 that is arranged further to the front than the leg shield 102 and is connected to the leg shield 102.

As illustrated in FIG. 5, the front cover unit 10 includes a left reinforcement cover 103 and a right reinforcement cover 104. The head pipe 21, the steering shaft 3, and the like are covered from the front by the front cover 101. In addition, the head pipe 21, the steering shaft 3, and the like are covered from the rear by the leg shield 102.

As illustrated in FIG. 1 and 2, the rear cover 11 is installed below the seat 6 and around a storage box (not shown). The rear cover 11 covers the periphery of the rear frame 24.

The lower cover 12 is provided between the leg shield 102 and the rear cover 11. The lower cover 12 covers the periphery of the lower frame 23. A footboard portion 13 for the driver to place his/her feet is installed on the upper surface of the lower cover 12. The footboard portion 13 is formed in a position downward and rearward of the front cover unit 10 and between the front cover unit 10 and the seat 6. The footboard portion 13 extends rearward in a substantially horizontally from a connecting portion with the lower end of the leg shield 102, and is connected to the lower end of the rear cover 11. As a result, a footrest space that is open to the left and right is formed between the leg shield 102 and the rear cover 11 and above the footboard portion 13 as seen in the vehicle side view. Alternatively, the footboard portion 13 may include a center tunnel portion that protrudes upward.

As illustrated in FIG. 1 and 2, a fender cover 17 is arranged above the front wheel 7. The fender cover 17 rotates with the front wheel 7 in accompaniment to the rotation of the pair of left and right front forks 4.

### (Front cover unit 10)

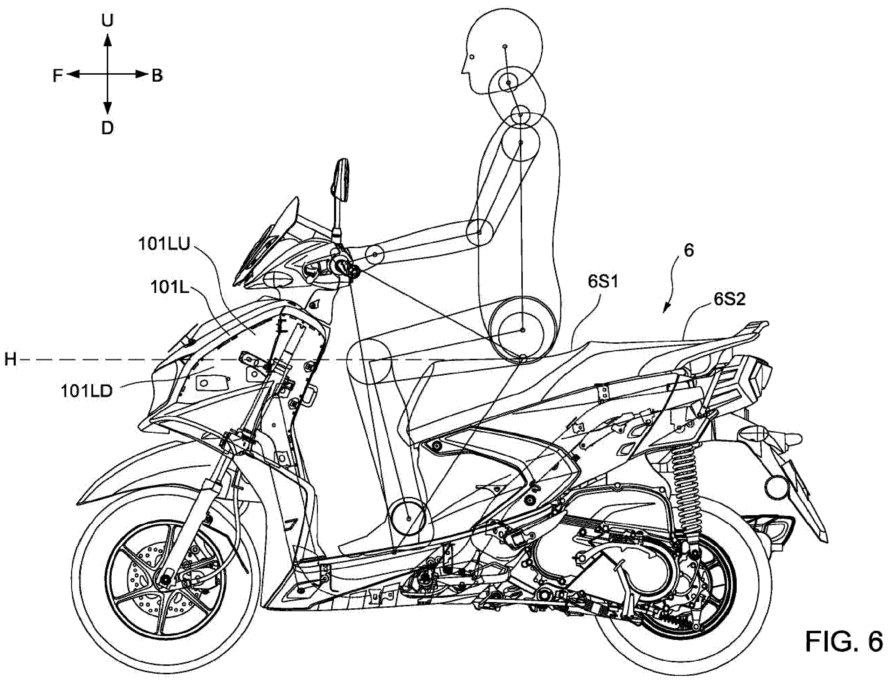

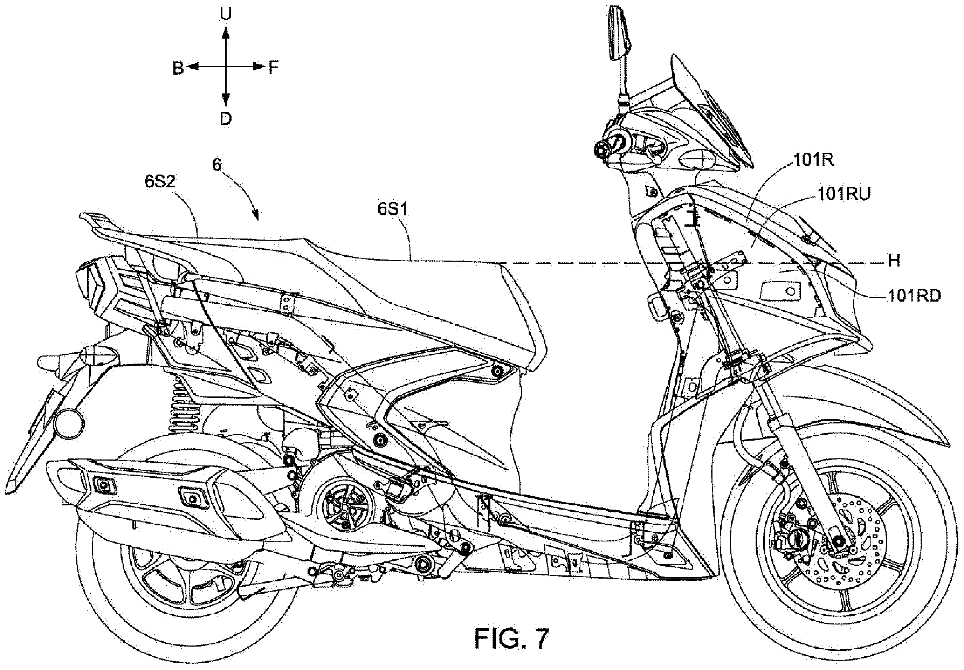

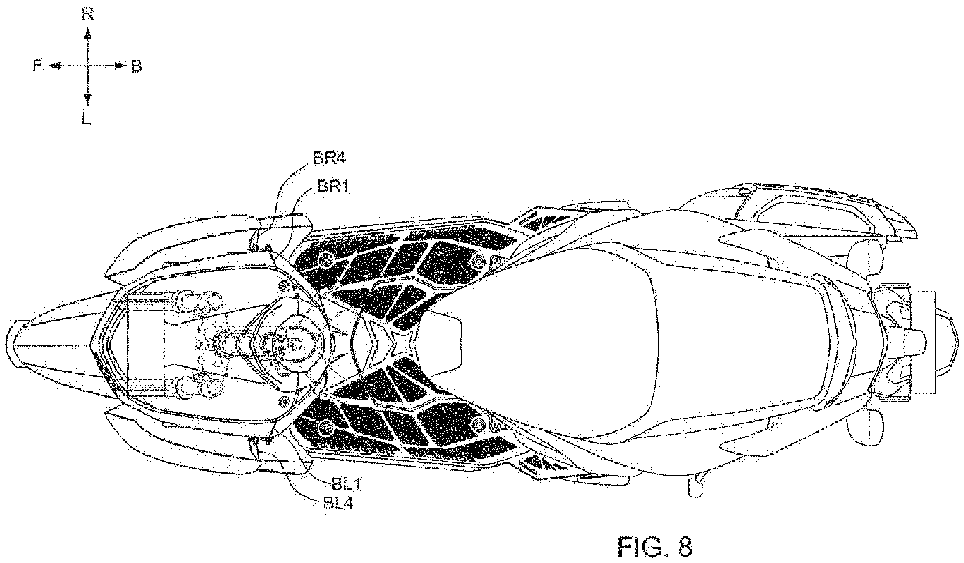

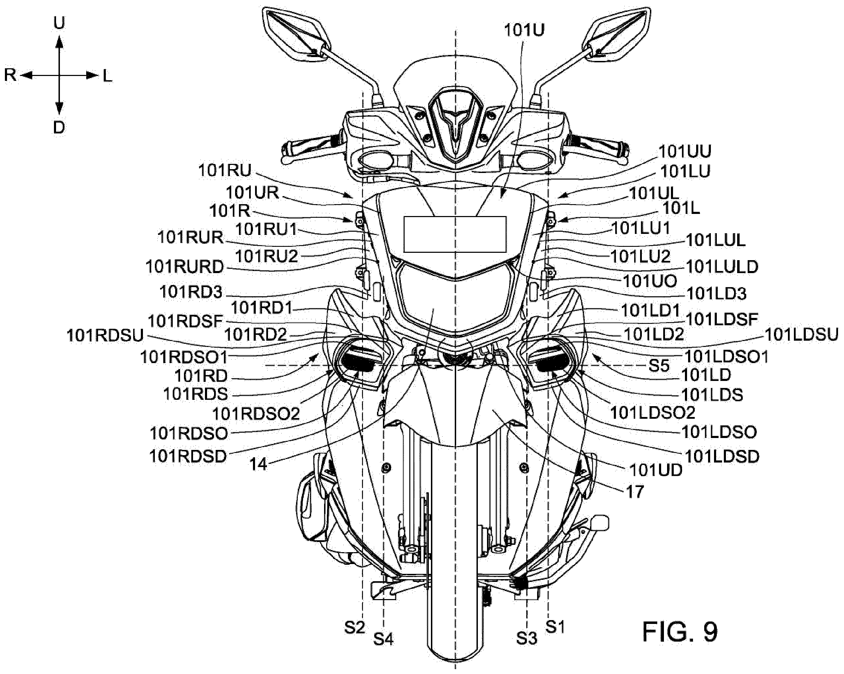

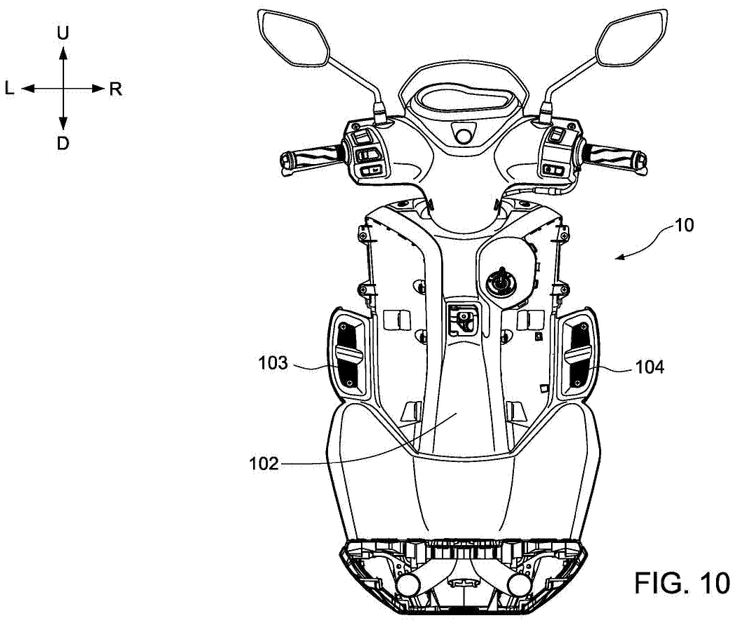

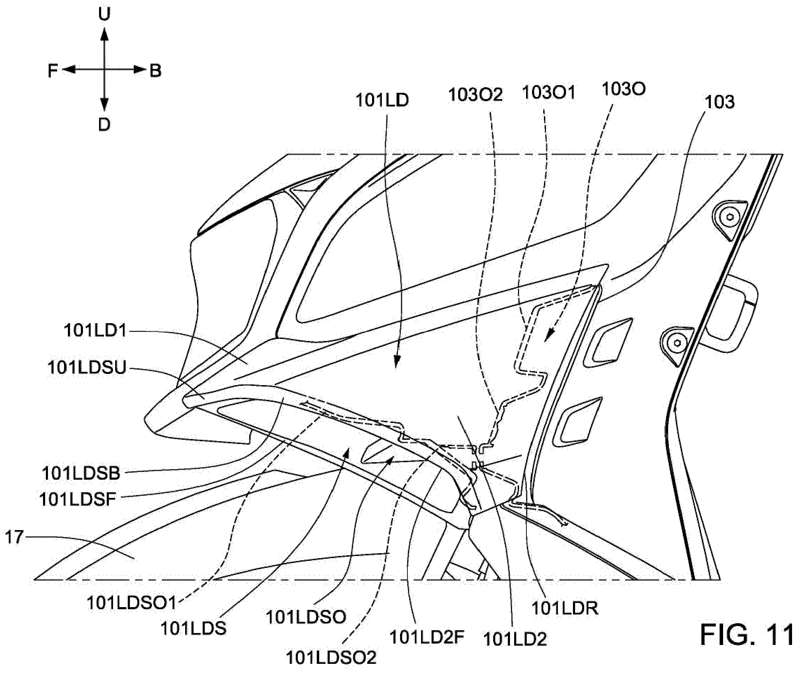

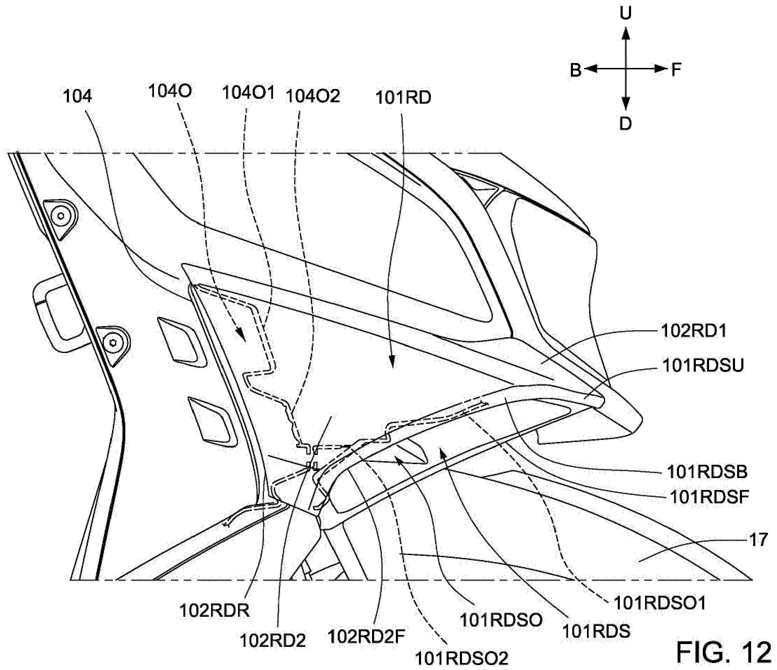

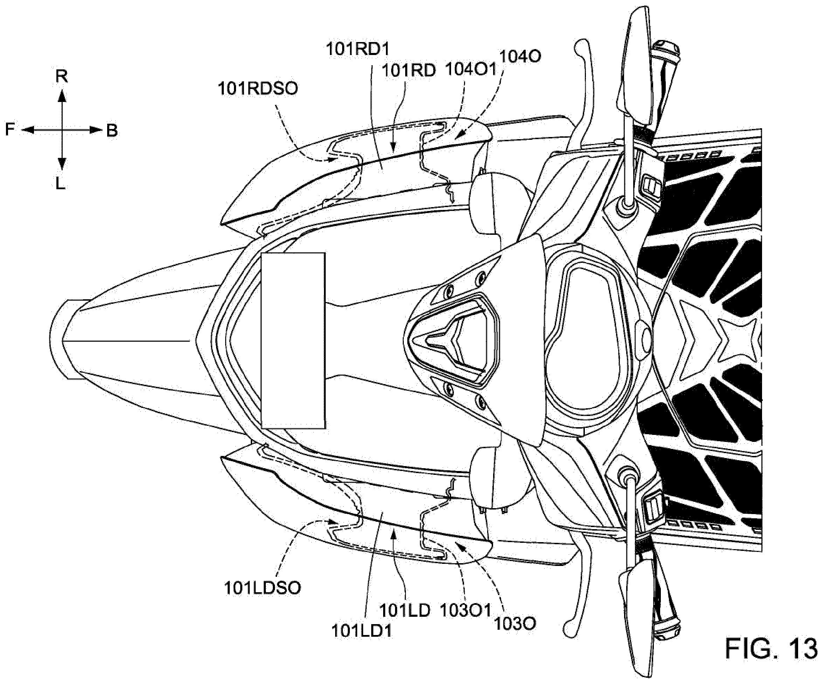

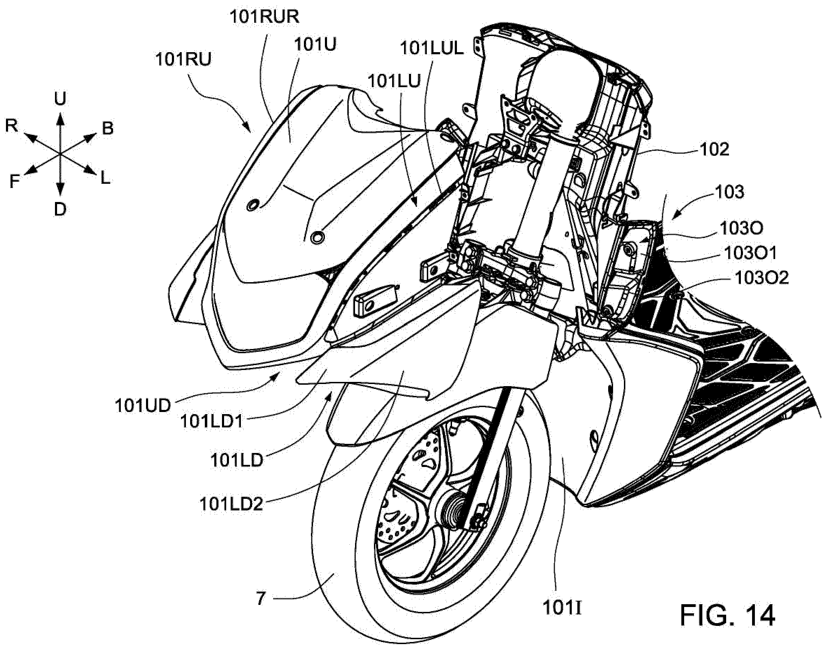

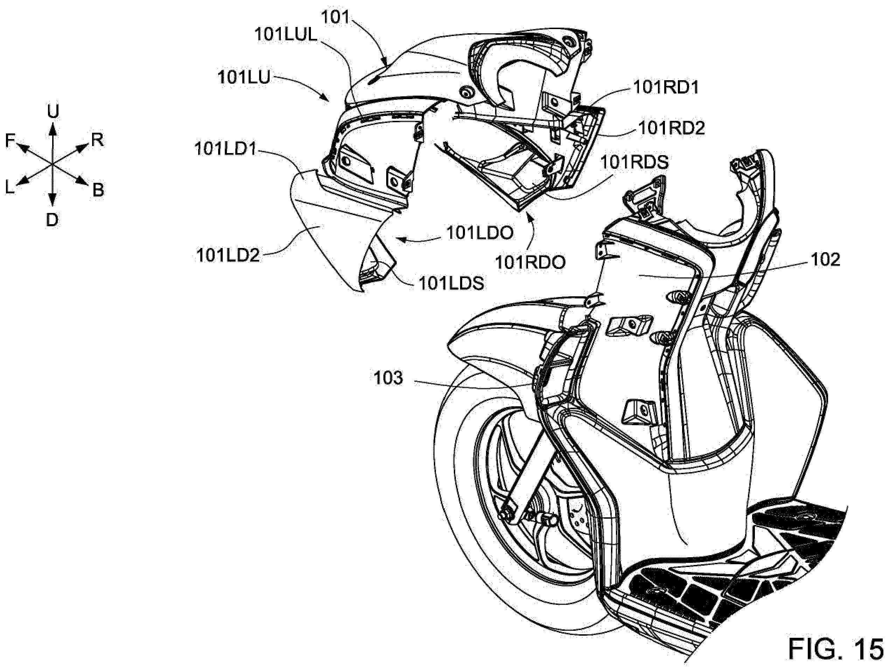

An outline of the structure of the front cover unit 10 of the present embodiment will be explained with reference to FIG. 6-15. FIG. 6 is a vehicle left side view of the straddled vehicle 1 while a driver is sitting thereon with a left side sub-cover 15 and a right side sub-cover 16 removed. FIG. 7 is a vehicle right side view of the straddled vehicle 1 with the left side sub-cover 15 and the right side sub-cover 16 removed. FIG. 8 is a vehicle plan view of the straddled vehicle 1 with the handle 8, the covers around the handle 8, the left side sub-cover 15, and the right side sub-cover 16 removed. FIG. 9 is a vehicle front view of the straddled vehicle 1 the left side sub-cover 15 and the right side sub-cover 16 removed. FIG. 10 is a rear view of the vehicle body positioned in front of the footboard portion 13 in the straddled vehicle 1 with the left side sub-cover 15 and the right side sub-cover 16 removed. FIG. 11 is an enlarged left side view of a portion of a front cover unit 10. FIG. 12 is an enlarged right side view of a portion of the front cover unit 10. FIG. 13 is a vehicle plan view of a front portion of the straddled vehicle 1. FIG. 14 is an assembly view when viewing the front portion of the straddled vehicle 1 from a point to the left and upward. FIG. 15 is an assembly view when viewing the front portion of the straddled vehicle 1 from a point to the left and downward.

FIG. 6-8 depicts portions such as the vehicle body frame 2 and the head pipe 21 of the vehicle internal structure with dotted lines. FIG. 11-13 depict a left shielding cover recess portion 101LDSO, a right shielding cover recess portion 101RDSO, a left reinforcement cover recess portion 1030, and a right reinforcement cover recess portion 1040, etc. with dotted lines.

As indicated above, the front cover unit 10 includes the leg shield 102 that is arranged further to the rear than the head pipe 21, the front cover 101 that is arranged further to the front than the leg shield 102 and is connected to the leg shield 102, the left reinforcement cover 103, and the right reinforcement cover 104.

The front cover 101 includes the upper cover 101U, the inner cover 1011, the left side cover 101L, and the right side cover 101R.

As illustrated in FIG. 4, the upper cover 101U is arranged further to the front than the head pipe 21 and above the front wheel 7 as seen in the vehicle front view. As illustrated in FIG. 1 and 2, the upper cover 101U is formed in a manner of extending forward and downward. As illustrated in FIG. 4 and 9, the upper cover 101U includes an upper edge portion 101UU, a lower edge portion 101UD, a left edge portion 101UL, and a right edge portion 101UR. As illustrated in FIG. 4, the upper edge portion 101UU of the upper cover 101U is formed in a manner of extending in the vehicle left-right direction in the front view. More preferably, the upper edge portion 101UU of the upper cover 101U is formed in a manner of extending in the vehicle left-right direction and in a manner that the center portion in the vehicle left-right direction protrudes upward as seen in the front view. As illustrated in FIG. 3, the upper edge portion 101UU of the upper cover 101U is formed in a manner of extending in the vehicle left-right direction as seen in the plan view.

In addition, as illustrated in FIG. 4, the lower edge portion 101UD of the upper cover 101U is formed in a manner of extending in the vehicle left-right direction as seen in the front view. More preferably, the lower edge portion 101UD of the upper cover 101U is formed in a manner of extending in the vehicle left-right direction and in a manner that the center portion in the vehicle left-right direction protrudes downward as seen in the front view. In addition, as illustrated in FIG. 3, the lower edge portion 101UD of the upper cover 101U is formed in a manner of extending in the vehicle left-right direction as seen in the plan view. More preferably, the lower edge portion 101UD of the upper cover 101U is formed in a manner of extending in the vehicle left-right direction and in a manner that the center portion in the vehicle left-right direction protrudes forward as seen in the plan view.

As illustrated in FIG. 4, the upper cover 101U includes, in a lower portion thereof, an opening 101UO. A headlight 14 is provided in the opening 101UO of the upper cover 101U.

As illustrated in FIG. 1, 2, and 14, the inner cover 1011 is arranged below the upper cover 101U and further to the rear than the front wheel 7, and is connected to the lower edge portion 101UD of the upper cover 101U. More specifically, although not illustrated, the lower edge portion 101UD of the upper cover 101U is formed in a manner of extending rearward in the vehicle front-back direction. The rear end of the lower edge portion 101UD is connected to the upper end of the inner cover 1011. As illustrated in FIG. 1, 2, and 14, the inner cover 1011 is formed in a manner of extending rearward and downward from the front of the vehicle in the side view. The inner cover 1011 is formed in a manner of extending rearward and downward of the vehicle from above the front wheel 7 in the side view. The inner cover 1011 is formed in a manner of extending rearward and downward of the vehicle from above the fender cover 17 in the side view. More preferably as illustrated in FIG. 14, the inner cover 1011 is formed in a manner that the surface thereof facing the front wheel 7 is recessed toward the rear. That is, as illustrated in FIG. 1, a left front edge 10111 of the inner cover 1011 in the left side view is formed in a manner of extending rearward and downward from the front of the vehicle, and then extending forward and downward from the rear of the vehicle. As illustrated in FIG. 2, a right front edge 10112 of the inner cover 1011 in the right side view is formed in a manner of extending rearward and downward from the front of the vehicle, and then extending forward and downward from the rear of the vehicle.

As illustrated in FIG. 6, the left side cover 101L includes a left side cover upper left portion 101LU that is positioned above a virtual horizontal line H that passes through the sitting surface 6S1 of the seat as seen in the vehicle left side view, and a left side cover lower left portion 101LD that is positioned below the virtual horizontal line H as seen in the vehicle left side view. In addition, as illustrated in FIG. 9, the left side cover upper left portion 101LU includes an upper left upper surface portion 101LU1 and an upper left side surface portion 101LU2. As illustrated in FIG. 9, the left side cover lower left portion 101LD includes a lower left upper surface portion 101LD1 and a lower left side surface portion 101LD2. As illustrated in FIG. 9, the left side cover lower left portion 101LD also includes a lower left coupling surface portion 101LD3.

As illustrated in FIG. 9, the left side cover 101L is arranged further to the left in the vehicle left-right direction than the front wheel 7 as seen in the vehicle front view, and is connected to the left edge portion 101UL of the upper cover 101U. As illustrated in FIG. 9, the upper left upper surface portion 101LU1 of the left side cover upper left portion 101LU extends in the vehicle width direction as seen in the front view. More specifically, the right edge portion of the upper left upper surface portion 101LU1 of the left side cover upper left portion 101LU is connected to the left edge portion 101UL of the upper cover 101U, and is formed in a manner of extending outward in the vehicle width direction from the left edge portion 101UL of the upper cover 101U as seen in the front view. As illustrated in FIG. 9, the upper left side surface portion 101LU2 of the left side cover upper left portion 101LU is formed in a manner of extending downward in the vehicle up-down direction from the outer end portion of the upper left upper surface portion 101LU1 to be connected to the lower left coupling surface portion 101LD3 of the left side cover lower left portion 101LD.

As illustrated in FIG. 9, the lower left coupling surface portion 101LD3 of the left side cover lower left portion 101LD is formed in a manner of extending downward in the vehicle up-down direction to be connected to the right edge in the vehicle left-right direction of the lower left upper surface portion 101LD1 of the left side cover lower left portion 101LD as seen in the front view. In addition, the lower left upper surface portion 101LD1 of the left side cover lower left portion 101LD is formed in a manner of extending leftward in the vehicle left-right direction from the lower edge of the lower left coupling surface portion 101LD3 of the left side cover lower left portion 101LD as seen in the front view. In addition, the lower left upper surface portion 101LD1 of the left side cover lower left portion 101LD extends further to the outside in the vehicle width direction than a lower end 101LULD of a left edge portion 101LUL of the left side cover upper left portion 101LU as seen in the front view. The lower left side surface portion 101LD2 of the left side cover lower left portion 101LD in the front view is also formed in a manner of extending downward in the vehicle up-down direction from the outer end portion of the lower left upper surface portion 101LD1 as seen in the vehicle front view.

That is, the upper left side surface portion 101LU2 of the left side cover upper left portion 101LU is positioned further to the right in the vehicle left-right direction than the lower left side surface portion 101LD2 of the left side cover lower left portion 101LD. More specifically, the upper left upper surface portion 101LU1 and the upper left side surface portion 101LU2 of the left side cover upper left portion 101LU are respectively positioned further to the right in the vehicle left-right direction than the lower left upper surface portion 101LD1 and the lower left side surface portion 101LD2 of the left side cover lower left portion 101 LD.

In addition, as illustrated in FIG. 11, a front edge 101LD2F of the lower left side surface portion 101LD2 is formed in a manner of extending rearward and downward of the vehicle from the front end of the lower left upper surface portion 101LD1 as seen in the vehicle left side view. As illustrated in FIG. 11, a rear edge 101LDR of the lower left side surface portion 101LD2 is formed in a manner of extending forward and downward of the vehicle from the rear end of the lower left upper surface portion 101LD1 as seen in the vehicle left side view.

As illustrated in FIG. 9, the left side cover lower left portion 101LD also includes a left shielding cover portion 101LDS.

As illustrated in FIG. 7, the right side cover 101R includes a right side cover upper right portion 101RU that is positioned above the virtual horizontal line H that passes through the sitting surface 6S1 of the seat as seen in the vehicle right side view, and a right side cover lower right portion 101RD that is positioned below the virtual horizontal line H as seen in the vehicle right side view. In addition, as illustrated in FIG. 9, the right side cover upper right portion 101RU includes an upper right upper surface portion 101RU1 and an upper right side surface portion 101RU2. As illustrated in FIG. 9, the right side cover lower right portion 101RD includes a lower right upper surface portion 101RD1 and a lower right side surface portion 101RD2. As illustrated in FIG. 9, the right side cover lower right portion 101RD also includes a lower right coupling surface portion 101RD3.

As illustrated in FIG. 9, the right side cover 101R is arranged further to the right in the vehicle left-right direction than the front wheel 7 as seen in the vehicle front view, and is connected to the right edge portion 101UR of the upper cover 101U. As illustrated in FIG. 9, the upper right upper surface portion 101RU1 of the right side cover upper right portion 101RU extends outward in the vehicle width direction as seen in the front view. More specifically, the left edge portion of the upper right upper surface portion 101RU1 of the right side cover upper right portion 101RU is connected to the right edge portion 101UR of the upper cover 101U, and is formed in a manner of extending outward in the vehicle width direction from the right edge portion 101UR of the upper cover 101U as seen in the front view. As illustrated in FIG. 9, the upper right side surface portion 101RU2 of the right side cover upper right portion 101RU is formed in a manner of extending downward in the vehicle up-down direction from the outer end portion of the upper right upper surface portion 101RU1 to be connected to the lower right coupling surface portion 101RD3 of the right side cover lower right portion 101 RD.

As illustrated in FIG. 9, the lower right coupling surface portion 101RD3 of the right side cover lower right portion 101RD is formed in a manner of extending downward in the vehicle up-down direction to be connected to the left edge in the vehicle left-right direction of the lower right upper surface portion 101RD1 of the right side cover lower right portion 101RD as seen in the front view. In addition, the lower right upper surface portion 101RD1 of the right side cover lower right portion 101RD is formed in a manner of extending rightward in the vehicle left-right direction from the lower edge of the lower right coupling surface portion 101RD3 of the right side cover lower right portion 101 RD as seen in the front view. The lower right upper surface portion 101RD1 of the right side cover lower right portion 101RD extends further to the outside in the vehicle width direction than a lower end 101RURD of a right edge portion 101RUR of the right side cover upper right portion 101RU as seen in the front view. The lower right side surface portion 101RD2 of the right side cover lower right portion 101RD as seen in the front view is formed in a manner of extending downward in the vehicle up-down direction from the outer end portion of the lower right upper surface portion 101RD1 as seen in the vehicle front view.

That is, the upper right side surface portion 101RU2 of the right side cover upper right portion 101RU is positioned further to the left in the vehicle left-right direction than the lower right side surface portion 101RD2 of the right side cover lower right portion 101RD. More specifically, the upper right upper surface portion 101RU1 and the upper right side surface portion 101RU2 of the right side cover upper right portion 101RU are respectively positioned further to the left in the vehicle left-right direction than the lower right upper surface portion 101RD1 and the lower right side surface portion 101RD2 of the right side cover lower right portion 101RD.

In addition, as illustrated in FIG. 12, a front edge 101RD2F of the lower right side surface portion 101RD2 is formed in a manner of extending rearward and downward of the vehicle from the front end of the lower right upper surface portion 101RD1 as seen in the vehicle right side view. As illustrated in FIG. 12, a rear edge 101RDR of the lower right side surface portion 101RD2 is formed in a manner of extending forward and downward of the vehicle from the rear end of the lower right upper surface portion 101RD1 as seen in the vehicle right side view.

As illustrated in FIG. 9, the right side cover lower right portion 101RD also includes a right shielding cover portion 101RDS.

### (Left side sub-cover 15, right side sub-cover 16)

As illustrated in FIG. 3, the left side sub-cover 15 is arranged to the left in the vehicle left-right direction of the left side cover upper left portion 101LU of the front cover 101 as seen in the vehicle plan view. The left side sub-cover 15 is arranged to the left in the vehicle left-right direction of the leg shield 102 as seen in the vehicle plan view. The right side sub-cover 16 is arranged to the right in the vehicle left-right direction of the right side cover upper right portion 101RU of the front cover 101 as seen in the vehicle plan view. The right side sub-cover 16 is arranged to the right in the vehicle left-right direction of the leg shield 102 as seen in the vehicle plan view.

As illustrated in FIG. 4, the left side sub-cover 15 is arranged to the left in the vehicle left-right direction of the left side cover upper left portion 101LU of the front cover 101 as seen in the vehicle front view. The right side sub-cover 16 is arranged to the right in the vehicle left-right direction of the right side cover upper right portion 101RU of the front cover 101 as seen in the vehicle front view. As illustrated in FIG. 5 and 10, the left side sub-cover 15 is arranged to the left in the vehicle left-right direction of the leg shield 102 as seen in the vehicle rear view. The right side sub-cover 16 is arranged to the right in the vehicle left-right direction of the leg shield 102 as seen in the vehicle rear view.

As illustrated in FIG. 1, the left side sub-cover 15 includes a left side sub-cover left front portion 15A as seen in the vehicle left side view. The left side sub-cover left front portion 15A is arranged below the upper cover 101U as seen in the vehicle left side view. The left side sub-cover left front portion 15A is arranged above the lower left upper surface portion 101LD1 and the lower left side surface portion 101LD2 of the left side cover lower left portion 101LD as seen in the vehicle left side view.

As illustrated in FIG. 2, the right side sub-cover 16 includes a right side sub-cover right front portion 16A as seen in the vehicle right side view. The right side sub-cover right front portion 16A is arranged below the upper cover 101U as seen in the vehicle right side view. The right side sub-cover right front portion 16A is arranged above the lower right upper surface portion 101RD1 and the lower right side surface portion 101RD2 of the right side cover lower right portion 101RD as seen in the vehicle right side view.

### (Left and right shielding cover portions 101LDS, 101RDS)

As illustrated in FIG. 9, at least a portion of the left shielding cover portion 101LDS is positioned further to the left in the vehicle left-right direction than the left edge portion 101LUL of the left side cover upper left portion 101LU. More specifically, as illustrated in FIG. 9, at least a portion of the left shielding cover portion 101LDS is positioned further to the left in the vehicle left-right direction than a vertical line S1 that passes through the left edge portion of the left side cover upper left portion 101LU as seen in the front view.

As illustrated in FIG. 9, at least a portion of the right shielding cover portion 101RDS is positioned further to the right in the vehicle left-right direction than the right edge portion 101RUR of the right side cover upper right portion 101RU. More specifically, as illustrated in FIG. 9, at least a portion of the right shielding cover portion 101RDS is positioned further to the right in the vehicle left-right direction than a vertical line S2 that passes through the right edge portion of the right side cover upper right portion 101RU as seen in the front view.

As illustrated in FIG. 11, the left shielding cover portion 101LDS is formed in a manner of extending rearward and downward from the front of the vehicle as seen in the vehicle left side view, and an upper edge portion 101LDSU of the left shielding cover portion 101LDS is connected to the front end of the lower left upper surface portion 101LD1 of the left side cover lower left portion 101LD. In addition, the left shielding cover portion 101LDS is formed in a manner that a front edge portion 101LDSF thereof extends rearward and downward from the front of the vehicle as seen in the vehicle left side view.The left shielding cover portion 101LDS is formed in a manner that a rear edge portion 101LDSB thereof extends rearward and downward from the front of the vehicle as seen in the vehicle left side view.

As illustrated in FIG. 4, the left shielding cover portion 101LDS is formed in a manner of extending downward from a lower edge of the lower left upper surface portion 101LD1 of the left side cover lower left portion 101LD as seen in the front view. The left shielding cover portion 101LDS includes the upper edge portion 101LDSU, a lower edge portion 101LDSD, the front edge portion 101LDSF, and the rear edge portion 101LDSB. The upper edge portion 101LDSU of the left shielding cover portion 101LDS is connected to the lower left upper surface portion 101LD1 of the left side cover lower left portion 101LD, and the rear edge portion 101LDSB of the left shielding cover portion 101LDS is connected to the lower left side surface portion 101LD2 of the left side cover lower left portion 101LD.

As illustrated in FIG. 1, the left shielding cover portion 101LDS is arranged in a position below the virtual horizontal line H as seen in the vehicle left side view. The left shielding cover portion 101LDS is arranged in a position below the left side sub-cover 15 as seen in the vehicle left side view. In addition, the left shielding cover portion 101LDS is arranged in a position below the headlight 14 as seen in the vehicle left side view.

As illustrated in FIG. 9, the left shielding cover portion 101LDS is arranged further to the left than the headlight 14 as seen in the front view. The left shielding cover portion 101LDS is arranged further to the left of the lower end 101LULD of the left edge portion 101LUL of the left side cover upper left portion 101LU. In addition, at least a portion of the left shielding cover portion 101LDS is arranged further to the left of the upper end of the left edge portion 101LUL of the left side cover upper left portion 101LU as seen in the front view. The left shielding cover portion 101LDS is arranged further to the left than the front wheel 7 as seen in the front view. At least a portion of the left shielding cover portion 101LDS is arranged further to the left than the fender cover 17 as seen in the front view.

As illustrated in FIG. 9, the left shielding cover portion 101LDS is arranged below the upper left side surface portion 101LU2. As illustrated in FIG. 4, the left shielding cover portion 101LDS is arranged below the left side sub-cover 15 as seen in the front view. As illustrated in FIG. 4, as seen in the vehicle front view, the outer end portion in the vehicle width direction of the left shielding cover portion 101LDS is arranged in a manner of being adjacent to the outer end portion in the vehicle width direction of the left side sub-cover 15 in the vehicle width direction. The outer end portion in the vehicle width direction of the left shielding cover portion 101 LDS does not protrude further to the outside in the vehicle width direction than the outer end portion in the vehicle width direction of the left side sub-cover 15 as seen in the vehicle front view.

As illustrated in FIG. 12, the right shielding cover portion 101RDS is formed in a manner of extending rearward and downward from the front of the vehicle as seen in the vehicle right side view, and an upper edge portion 101RDSU of the right shielding cover portion 101RDS is connected to the front end of the lower right upper surface portion 101RD1 of the right side cover lower right portion 101RD. In addition, a front edge portion 101RDSF of the right shielding cover portion 101RDS is formed in a manner of extending rearward and downward from the front of the vehicle as seen in the vehicle right side view. A rear edge portion 101RDSB of the right shielding cover portion 101RDS is formed in a manner of extending rearward and downward from the front of the vehicle as seen in the vehicle right side view.

As illustrated in FIG. 4, the right shielding cover portion 101RDS is formed in a manner of extending downward from a lower edge of the lower right upper surface portion 101RD1 of the right side cover lower right portion 101RD as seen in the front view. The right shielding cover portion 101RDS includes an upper edge portion 101RDSU, a lower edge portion 101RDSD, the front edge portion 101RDSF, and the rear edge portion 101RDSB as seen in the front view. The upper edge portion 101RDSU of the right shielding cover portion 101RDS is connected to the lower right upper surface portion 101RD1 of the right side cover lower right portion 101RD, and the rear edge portion 101RDSB of the right shielding cover portion 101 RDS is connected to the lower right side surface portion 101RD2 of the right side cover lower right portion 101RD.

As illustrated in FIG. 2, the right shielding cover portion 101RDS is arranged in a position below the virtual horizontal line H as seen in the vehicle right side view. The right shielding cover portion 101RDS is arranged in a position below the right side sub-cover 16 as seen in the vehicle right side view. In addition, the right shielding cover portion 101RDS is arranged in a position below the headlight 14 as seen in the vehicle right side view.

As illustrated in FIG. 9, the right shielding cover portion 101RDS is arranged further to the right than the headlight 14 as seen in the front view. The right shielding cover portion 101RDS is arranged further to the right than the lower end 101RURD of the right edge portion 101RUR of the right side cover upper right portion 101RU as seen in the front view. In addition, at least a portion of the right shielding cover portion 101RDS is arranged further to the right than the upper end of the right edge portion 101RUR of the right side cover upper right portion 101RU as seen in the front view. The right shielding cover portion 101RDS is arranged further to the right than the front wheel 7 as seen in the front view. At least a portion of the right shielding cover portion 101RDS is arranged further to the right than the fender cover 17 as seen in the front view.

As illustrated in FIG. 9, the right shielding cover portion 101RDS is arranged below the upper right side surface portion 101RU2. As illustrated in FIG. 4, the right shielding cover portion 101RDS is arranged below the right side sub-cover 16 as seen in the front view. As illustrated in FIG. 4, as seen in the vehicle front view, the outer end portion in the vehicle width direction of the right shielding cover portion 101RDS is arranged in a manner of being adjacent to the outer end portion in the vehicle width direction of the right side sub-cover 16 in the vehicle width direction. The outer end portion in the vehicle width direction of the right shielding cover portion 101RDS does not protrude further to the outside in the vehicle width direction than the outer end portion in the vehicle width direction of the right side sub-cover 16 as seen in the vehicle front view.

The left shielding cover portion 101LDS includes the left shielding cover recess portion 101 LDSO. As illustrated in FIG. 11, the left shielding cover recess portion 101LDSO has the shape recessed toward the rear of the vehicle as seen in the vehicle left side view. As illustrated in FIG. 11, the left shielding cover recess portion 101LDSO is arranged facing forward of the vehicle as seen in the vehicle left side view. More specifically, as illustrated in FIG. 11, the left shielding cover recess portion 101LDSO of the left shielding cover portion 101LDS is arranged facing forward and downwardof the vehicle. As illustrated in FIG. 1 and 11, the left shielding cover recess portion 101LDSO is arranged above the front wheel 7. The lower end portion of the left shielding cover recess portion 101LDSO is arranged above the upper end portion of the front wheel 7. As illustrated in FIG. 11, at least a portion of the left shielding cover recess portion 101LDSO is arranged above the fender cover 17. The lower end portion of the left shielding cover recess portion 101LDSO is arranged below the upper end portion of the fender cover 17. The upper end portion of the left shielding cover recess portion 101LDSO is arranged above the upper end portion of the fender cover 17.

As illustrated in FIG. 9, the left shielding cover recess portion 101LDSO includes a first rear surface 101LDSO1 and a second rear surface 101LDSO2. The first rear surface 101LDSO1 of the left shielding cover recess portion 101LDSO and the second rear surface 101LDSO2 of the left shielding cover recess portion 101LDSO are arranged in the vehicle up-down direction. The first rear surface 101 LDSO1 of the left shielding cover recess portion 101LDSO is arranged above the second rear surface 101LDSO2. As illustrated in FIG. 11, the first rear surface 101LDSO1 of the left shielding cover recess portion 101LDSO is formed in a manner of extending rearward and downward from the front of the vehicle and then extending downward as seen in the vehicle left side view, and is connected to the second rear surface 101LDSO2 of the left shielding cover recess portion 101 LDSO. As illustrated in FIG. 11, the second rear surface 101LDSO2 of the left shielding cover recess portion 101LDSO is formed in a manner of extending rearward from the front of the vehicle and then extending rearward and downward as seen in the vehicle left side view.

As illustrated in FIG. 13, the left shielding cover recess portion 101LDSO has a shape recessed toward the rear of the vehicle as seen in the vehicle plan view.

The right shielding cover portion 101RDS includes a right shielding cover recess portion 101RDSO. As illustrated in FIG. 12, the right shielding cover recess portion 101RDSO has a shape recessed toward the rear of the vehicle as seen in the vehicle right side view. As illustrated in FIG. 12, the right shielding cover recess portion 101RDSO is arranged facing forward of the vehicle as seen in the vehicle right side view. More specifically, as illustrated in FIG. 12, the right shielding cover recess portion 101RDSO of the right shielding cover portion 101RDS is arranged facing forward and downward of the vehicle. As illustrated in FIG. 2 and 12, the right shielding cover recess portion 101RDSO is arranged above the front wheel 7. The lower end portion of the right shielding cover recess portion 101RDSO is arranged above the upper end portion of the front wheel 7. As illustrated in FIG. 12, at least a portion of the right shielding cover recess portion 101RDSO is arranged above the fender cover 17. The lower end portion of the right shielding cover recess portion 101RDSO is arranged below the upper end portion of the fender cover 17. The upper end portion of the right shielding cover recess portion 101RDSO is arranged above the upper end portion of the fender cover 17.

As illustrated in FIG. 9, the right shielding cover recess portion 101RDSO includes a first rear surface 101RDSO1 and a second rear surface 101RDSO2. The first rear surface 101RDSO1 of the right shielding cover recess portion 101RDSO and the second rear surface 101RDSO2 of the right shielding cover recess portion 101RDSO are arranged in the vehicle up-down direction. The first rear surface 101RDSO1 of the right shielding cover recess portion 101RDSO is arranged above the second rear surface 101RDSO2. As illustrated in FIG. 12, the first rear surface 101RDSO1 of the right shielding cover recess portion 101RDSO is formed in a manner of extending rearward and downward from the front of the vehicle and then extend downward as seen in the vehicle right side view, and is connected to the second rear surface 101 RDSO2 of the right shielding cover recess portion 101 RDSO. As illustrated in FIG. 11, the second rear surface 101RDSO2 of the right shielding cover recess portion 101RDSO is formed in a manner of extending rearward from the front of the vehicle and then extending rearward and downward as seen in the vehicle right side view.

As illustrated in FIG. 13, the right shielding cover recess portion 101RDSO has the shape recessed toward the rear of the vehicle as seen in the vehicle plan view.

As illustrated in FIG. 1 and 9, a projected area of the left shielding cover portion 101LDS as seen in the vehicle front view is larger than a projected area of the left shielding cover portion 101LDS as seen in the vehicle left side view. As illustrated in FIG. 1 and 4, the length of the upper edge portion 101LDSU as seen in the vehicle front view of the left shielding cover portion 101LDS is greater than the length of the upper edge portion 101LDSU as seen in the vehicle left side view. As illustrated in FIG. 9 and 11, the ratio of the length of the upper edge portion 101LDSU with respect to the rear edge portion 101LDSB of the left shielding cover portion 101LDS as seen in the vehicle front view, is greater than the ratio of the length of the upper edge portion 101LDSU with respect to the rear edge portion 101LDSB as seen in the vehicle left side view. As illustrated in FIG. 11, as seen in the vehicle left side view, the inner edge portion (front edge portion 101LDSF) of the left shielding cover portion 101LDS as seen in the vehicle front view is arranged further to the front than the outer edge part (rear edge portion 101 LDSB) of the left shielding cover portion 101LDS as seen in the vehicle front view.

As illustrated in FIG. 1 and 9, a projected area of the right shielding cover portion 101RDS as seen in the vehicle front view is larger than a projected area of the right shielding cover portion 101RDS as seen in the vehicle right side view. As illustrated in FIG. 1 and 4, the length of the upper edge portion 101RDSU as seen in the vehicle front view of the right shielding cover portion 101RDS is greater than the length of the upper edge portion 101RDSU as seen in the vehicle right side view. As illustrated in FIG. 9 and 12, the ratio of the length of the upper edge portion 101RDSU with respect to the rear edge portion 101RDSB of the right shielding cover portion 101RDS as seen in the vehicle front view, is greater than the ratio of the length of the upper edge portion 101RDSU with respect to the rear edge portion 101RDSB as seen in the vehicle left side view. As illustrated in FIG. 12, as seen in the vehicle right side view, the inner edge portion (front edge portion 101 RDSF) of the right shielding cover portion 101 RDS as seen in the vehicle front view is arranged further to the front than the outer edge part (rear edge portion 101 RDSB) of the right shielding cover portion 101RDS as seen in the vehicle front view.

As illustrated in FIG. 9, the fender cover 17 is arranged below the upper cover 101U of the front cover 101 as seen in the vehicle front view. At least a portion of the front edge portion 101LDSF of the left shielding cover portion 101 LDS is positioned further to the right in the vehicle left-right direction than a vertical line S3 that passes through a left end portion in the vehicle left-right direction of the fender cover 17. At least a portion of the front edge portion 101RDSF of the right shielding cover portion 101 RDS is positioned further to the left in the vehicle left-right direction than a vertical line S4 that passes through a right end portion in the vehicle left-right direction of the fender cover 17. At least portions of both the left shielding cover portion 101LDS and the right shielding cover portion 101 RDS as seen in the vehicle front view are arranged below a horizontal line S5 that passes through the upper end portion of the fender cover 17. More specifically, the upper edge portion 101LDSU of the left shielding cover portion 101LDS and the upper edge portion 101RDSU of the right shielding cover portion 101RDS are arranged above the horizontal line S5 that passes through the upper end part of the fender cover 17. The lower edge portion 101LDSD of the left shielding cover portion 101LDS and the lower edge portion 101RDSD of the right shielding cover portion 101 RDS are arranged below the horizontal line S5 that passes through the upper end part of the fender cover 17.

### (Left and right reinforcement cover portions 103, 104)

As illustrated in FIG. 14, the left reinforcement cover 103 is arranged separately from the front cover 101. The left reinforcement cover 103 is provided on the leg shield 102.

As illustrated in FIG. 10, the left reinforcement cover 103 is arranged further to the left than the left edge portion of the leg shield 102 as seen in the rear view.As illustrated in FIG. 14 and 15, the left reinforcement cover 103 is arranged in a manner of being inserted, from the rear of the left side cover lower left portion 101LD, into an opening portion 101LDO formed by the lower left upper surface portion 101LD1, the lower left side surface portion 101LD2, and the left shielding cover portion 101LDS of the left side cover lower left portion 101LD. That is, the left reinforcement cover 103 is positioned further to the left in the vehicle left-right direction than the left edge portion 101LUL of the left side cover upper left portion 101LU.

In addition, the right reinforcement cover 104 is arranged separately from the front cover 101 in the same way as the left reinforcement cover 103. The right reinforcement cover 104 is provided on the leg shield 102.

As illustrated in FIG. 10, the right reinforcement cover 104 is arranged further to the right than the right edge portion of the leg shield 102 as seen in the rear view. In the same way as the left reinforcement cover 103, the right reinforcement cover 104 is arranged in a manner of being inserted, from the rear of the right side cover lower right portion 101RD, into an opening portion 101RDO formed by the lower right upper surface portion 101RD1, the lower right side surface portion 101RD2, and the right shielding cover portion 101RDS of the right side cover lower right portion 101RD. That is, the right reinforcement cover 104 is positioned further to the right in the vehicle left-right direction than the right edge portion 101RUR of the right side cover upper right portion 101RU.

As illustrated in FIG. 11, the left reinforcement cover 103 includes a left reinforcement cover recess portion 1030 that is recessed toward the front of the vehicle as seen in the vehicle left side view. The left reinforcement cover recess portion 1030 is positioned further to the rear than the left shielding cover recess portion 101LDSO as seen in the vehicle left side view.

As illustrated in FIG. 14, the left reinforcement cover recess portion 1030 of the left reinforcement cover 103 includes a first front surface 10301 and a second front surface 10302. As illustrated in FIG. 11, the first front surface 10301 of the left reinforcement cover recess portion 1030 is formed in a manner of being recessed toward the front of the vehicle as seen in the vehicle left side view, and the lower end of the first front surface 10301 is connected to the second front surface 10302 of the left reinforcement cover recess portion 1030. As illustrated in FIG. 11, the second front surface 10302 of the left reinforcement cover recess portion 1030 is formed in a manner of being recessed toward the front of the vehicle as seen in the vehicle left side view. The second front surface 10302 of the left reinforcement cover recess portion 1030 is connected to the second rear surface 101LDSO2 of the left shielding cover recess portion 101LDSO.

As illustrated in FIG. 13, at least a portion of the left reinforcement cover recess portion 1030 overlaps the left side cover lower left portion 101LD as seen in the vehicle plan view. More specifically, the first front surface 10301 of the left reinforcement cover recess portion 1030 is arranged further to the front than the rear edge of the lower left upper surface portion 101LD1 of the left side cover lower left portion 101LD as seen in the vehicle plan view.

As illustrated in FIG. 11, at least a portion of the left reinforcement cover recess portion 1030 overlaps the left side cover lower left portion 101LD as seen in the vehicle left side view. More specifically, the first front surface 10301 and the second front surface 10302 of the left reinforcement cover recess portion 1030 are arranged further to the front than the rear edge 101LDR of the lower left side surface portion 101LD2 of the left side cover lower left portion 101 LD as seen in the vehicle left side view.

As illustrated in FIG. 12, the right reinforcement cover 104 includes a right reinforcement cover recess portion 1040 that is recessed toward the front of the vehicle as seen in the vehicle right side view. The right reinforcement cover recess portion 1040 is positioned further to the rear than the right shielding cover recess portion 104RDSO as seen in the vehicle right side view.

The right reinforcement cover recess portion 1040 of the right reinforcement cover 104 includes a first front surface 10401 and a second front surface 10402 in the same way as the left reinforcement cover 103. As illustrated in FIG. 12, the first front surface 10401 of the right reinforcement cover recess portion 1040 is formed in a manner of being recessed toward the front of the vehicle as seen in the vehicle right side view, and the lower end of the first front surface 10401 is connected to the second front surface 10402 of the right reinforcement cover recess portion 1040. As illustrated in FIG. 12, the second front surface 10402 of the right reinforcement cover recess portion 1040 is formed in a manner of being recessed toward the front of the vehicle as seen in the vehicle right side view. The second front surface 10402 of the right reinforcement cover recess portion 1040 is connected to the second rear surface 101 RDSO2 of the right shielding cover recess portion 101RDSO.

As illustrated in FIG. 13, at least a portion of the right reinforcement cover recess portion 1040 overlaps the right side cover lower right portion 101RD as seen in the vehicle plan view. More specifically, the first front surface 10401 of the right reinforcement cover recess portion 1040 is arranged further to the front than the rear edge of the lower right upper surface portion 101RD1 of the right side cover lower right portion 101RD as seen in the vehicle plan view.

As illustrated in FIG. 11, at least a portion of the right reinforcement cover recess portion 1040 overlaps the right side cover lower right portion 101RD as seen in the vehicle right side view. More specifically, the first front surface 10401 and the second front surface 10402 of the right reinforcement cover recess portion 1040 are arranged further to the front than the rear edge 101RDR of the lower right side surface portion 101RD2 of the right side cover lower right portion 101RD as seen in the vehicle right side view.

### (Effects of embodiment)

(1) As indicated above, the straddled vehicle 1 of the present embodiment includes the head pipe 21, the pair of left and right front forks 4, the front wheel 7, the seat 6, and a front cover unit 10. The pair of left and right front forks 4 are rotatably provided to the head pipe 21. The front wheel 7 is rotatably supported by the pair of left and right front forks 4. The seat 6 is arranged further to the rear of the vehicle than the head pipe 21 and includes the sitting surface 6S1 on which the driver sits. The front cover unit 10 is arranged further to the front than the seat 6. The front cover unit 10 includes the leg shield 102 arranged further to the rear than the head pipe 21, the front cover 101, the left reinforcement cover 103, and the right reinforcement cover 104. The front cover 101 is arranged further to the front than than the leg shield 102 and is connected to the leg shield 102. The front cover 101 includes the upper cover 101U, the inner cover 1011, the left side cover 101L, and the right side cover 101R. The upper cover 101U is arranged further to the front than the head pipe 21 and above the front wheel 7 as seen in the vehicle front view. The inner cover 1011 is arranged below the upper cover 101U and further to the rear than the front wheel 7, and is connected to the lower edge portion 101UD of the upper cover 101U. The left side cover 101L is arranged further to the left in the vehicle left-right direction than the front wheel 7 as seen in the vehicle front view, and is connected to the left edge portion 101UL of the upper cover 101U. The right side cover 101R is arranged further to the right in the vehicle left-right direction than the front wheel 7 as seen in the vehicle front view, and is connected to the right edge portion 101UR of the upper cover 101U. The left side cover 101L includes the left side cover upper left portion 101LU and the left side cover lower left portion 101LD. The left side cover upper left portion 101LU is positioned above the virtual horizontal line H that passes through the sitting surface 6S1 of the seat 6 as seen in the vehicle left side view. The left side cover lower left portion 101LD is positioned below the virtual horizontal line H as seen in the vehicle left side view. The left side cover lower left portion 101LD includes the lower left upper surface portion 101LD1 and the lower left side surface portion 101LD2. The lower left upper surface portion 101LD1 extends further to the outside in the vehicle width direction than the lower end of the left edge portion 101UL of the left side cover upper left portion 101LU as seen in the vehicle front view. The lower left side surface portion 101LD2 extends downward in the vehicle up-dow direction from the outer end portion of the lower left upper surface portion 101LD1 as seen in the vehicle front view. The right side cover 101R includes the right side cover upper right portion 101RU and the right side cover lower right portion 101RD. The right side cover upper right portion 101RU is positioned above the virtual horizontal line H that passes through the sitting surface 6S1 of the seat 6 as seen in the vehicle right side view. The front cover lower right portion 101RD is positioned below the virtual horizontal line H as seen in the vehicle right side view. The right side cover lower right portion 101RD includes the lower right upper surface portion 101RD1 and the lower right side surface portion 101RD2. The lower right upper surface portion 101RD1 extends further to the outside in the vehicle width direction than the lower end of the right edge portion 101UR of the right side cover upper right portion 101RU as seen in the vehicle front view. The lower right side surface portion 101RD2 extends downward in the vehicle up-dow direction from the outer end portion of the lower right upper surface portion 101RD1 as seen in the vehicle front view. The left side cover lower left portion 101LD further includes the left shielding cover portion 101LDS. At least a portion of the left shielding cover portion 101LDS is positioned further to the left in the vehicle left-right direction than the left edge portion 101LUL of the left side cover upper left portion 101LU. The right side cover lower right portion 101RD further includes the right shielding cover portion 101RDS. At least a portion of the right shielding cover portion 101RDS is positioned further to the right in the vehicle left-right direction than the right edge portion 101RUR of the right side cover upper right portion 101RU. The left shielding cover portion 101LDS includes the left shielding cover recess portion 101 LDSO. The left shielding cover recess portion 101LDSO has the shape recessed toward the rear of the vehicle as seen in the vehicle left side view and is arranged facing forward of the vehicle. The right shielding cover portion 101RDS includes the right shielding cover recess portion 101 RDSO. The right shielding cover recess portion 101RDSO has the shape recessed toward the rear of the vehicle as seen in the vehicle right side view and is arranged facing forward of the vehicle. The left reinforcement cover 103 is arranged separately from the front cover 101 and is positioned further to the left in the vehicle left-right direction than the left edge portion 101UL of the left side cover upper left portion 101LU. The right reinforcement cover 104 is arranged separately from the front cover 101 and is positioned further to the right in the vehicle left-right direction than the right edge portion 101UR of the right side cover upper right portion 101RU. The left reinforcement cover 103 includes the left reinforcement cover recess portion 1030 that is positioned further to the rear than the left shielding cover recess portion 101LDSO as seen in the vehicle left side view and is recessed toward the front of the vehicle as seen in the vehicle left side view. At least a portion of the left reinforcement cover recess portion 1030 overlaps the left side cover lower left portion 101LD as seen in the vehicle plan view. At least a portion of the left reinforcement cover recess portion 1030 overlaps the left side cover lower left portion 101LD as seen in the vehicle left side view. The right reinforcement cover 104 includes the right reinforcement cover recess portion 1040 that is positioned further to the rear than the right shielding cover recess portion 101RDSO as seen in the vehicle right side view and is recessed toward the front of the vehicle as seen in the vehicle right side view. At least a portion of the right reinforcement cover recess portion 1040 overlaps the right side cover lower right portion 101RD as seen in the vehicle plan view. At least a portion of the right reinforcement cover recess portion 1040 overlaps the right side cover lower right portion 101RD as seen in the vehicle right side view.
   As indicated above, in the straddled vehicle 1 of the first embodiment, the left side cover lower left portion 101LD includes the left shielding cover portion 101LDS at least a portion of which is positioned further to the left in the vehicle left-right direction than the left edge portion 101UL of the left side cover upper left portion 101LU. The right side cover lower right portion 101RD includes the right shielding cover portion 101RDS at least a portion of which is positioned further to the right in the vehicle left-right direction than the right edge portion 101UR of the right side cover upper right portion 101RU. That is, in the straddled vehicle of the first embodiment, the left shielding cover portion 101LDS and the right shielding cover portion 101RDS are respectively formed on portions of the left and right side covers 101L, 101R that tend to receive the muddy water scattered by the movement of the front wheel 7 (namely, the left side cover lower left portion 101LD and the right side cover lower right portion 101RD). As a result, the muddy water scattered by the movement of the front wheel 7 is blocked by the left and right shielding cover portions 101LDS, 101RDS and stopped on the left and right shielding cover portions 101LDS, 101RDS, and therefore it becomes difficult for the muddy water to flow toward the rear of the vehicle. Therefore, the effect of suppressing the muddy water scattered by the movement of the front wheel 7 from falling onto the legs of the driver can be achieved. In addition, by forming the left and right shielding cover portions 101LDS, 101RDS respectively on the portions of the left side cover lower left portion 101LD and the right side cover lower right portion 101RD in positions below the virtual horizontal line H that passes through the sitting surface 6S1 of the seat 6, the external force caused by the traveling wind received by the left and right shielding cover portions 101LDS, 101RDS can be reduced. Therefore, by forming the left and right side covers 101L, 101R that include the left and right shielding cover portions 101LDS, 101RDS, the situation in which the coupling rigidity between the front cover 101 and the leg shield 102 is insufficient and the front cover 101 and the leg shield 102 tend to shift due to the external force received by the left and right shielding cover portions 101LDS, 101RDS, does not occur even when the muddy water is blocked by the left and right shielding cover portions 101LDS, 101RDS and the amount of muddy water flowing toward the rear of the vehicle is reduced.
   In addition, in the straddled vehicle of the first embodiment, the left side cover lower left portion 101LD includes the lower left upper surface portion 101LD1 that extends to the outside in the vehicle width direction from the lower end of the left edge portion 101 UL of the left side cover upper left portion 101LU as seen in the vehicle front view, and the lower left side surface portion 101LD2 that extends downward in the vehicle up-down direction from the outer end portion of the lower left upper surface portion 101LD1 as seen in the vehicle front view. The right side cover lower right portion 101RD includes the lower right upper surface portion 101RD1 that extends to the outside in the vehicle width direction from the lower end of the right edge portion 101UR of the right side cover upper right portion 101RU as seen in the vehicle front view, and the lower right side surface portion 101RD2 that extends downward in the vehicle up-down direction from the outer end portion of the lower right upper surface portion 101RD1 as seen in the vehicle front view. That is, in the straddled vehicle of the first embodiment, the left and right shielding cover portions 101LDS, 101RDS are formed the portions of on the left and right side covers 101L, 101R in the positions below the virtual horizontal line H that passes through the sitting surface 6S1 of the seat 6, and the left and right side covers 101L, 101R are formed in a manner that the upper portions of the left and right side covers 101L, 101R positioned above the virtual horizontal line H that passes through the sitting surface 6S1 of the seat 6 are formed to be narrower in the vehicle width direction in comparison to the lower portions which are positioned below the virtual horizontal line H that passes through the sitting surface 6S1 of the seat 6. As a result, in comparison to forming the left and right shielding cover portions 101LDS, 101RDS on the portions of the left and right side covers 101L, 101R up to a position higher than the virtual horizontal line H that passes through the sitting surface 6S1 of the seat 6, by forming the left and right shielding cover portions 101LDS, 101RDS on the respective left side cover lower left portion 101LD and the right side cover lower right portion 101RD, in addition to the external force due to the traveling wind received by the left and right shielding cover portions 101LDS, 101RDS being reduced, the surface area of the upper portions of the left and right side covers 101L, 101R impacted by the traveling wind is reduced in comparison to when the entirety of the left and right side covers 101L, 101R is wider in the vehicle width direction. Consequently, the external force due to the traveling wind received by the left and right shielding cover portions 101LDS, 101RDS is reduced and the suppression of the shifting of the front cover 101 and the leg shield 102 can be further improved.
   Furthermore, in the straddled vehicle of the first embodiment, the left reinforcement cover 103 is arranged separately from the front cover 101 and is positioned further to the left in the vehicle left-right direction than the left edge portion 101UL of the left side cover upper left portion 101LU. The left reinforcement cover 103 includes the left reinforcement cover recess portion 1030 that is recessed toward the front of the vehicle as seen in the vehicle left side view, and at least a portion of the left reinforcement cover recess portion 1030 overlaps the left side cover lower left portion 101LD as seen in the vehicle plan view, and at least a portion of the left reinforcement cover recess portion 1030 overlaps the left side cover lower left portion 101LD as seen in the vehicle left side view. The right reinforcement cover 104 is arranged separately from the front cover 101 and is positioned further to the right in the vehicle left-right direction than the right edge portion 101UR of the right side cover upper right portion 101RU. The right reinforcement cover 104 includes the right reinforcement cover recess portion 1040 that is recessed toward the front of the vehicle as seen in the vehicle right side view, and at least a portion of the right reinforcement cover recess portion 1040 overlaps the right side cover lower right portion 101RD as seen in the vehicle plan view, and at least a portion of the right reinforcement cover recess portion 1040 overlaps the right side cover lower right portion 101RD as seen in the vehicle right side view. That is, in the straddled vehicle of the first embodiment, the left and right reinforcement covers 103, 104 respectively include the left and right reinforcement cover recess portions 1030, 1040 that have the shape recessed toward the front, and are arranged in a manner of being inserted into the left and right side covers 101L, 101R from the rear of the left and right side covers 101L, 101R. Consequently, the left and right shielding cover portions 101LDS, 101RDS are respectively formed on the left side cover lower left portion 101LD and the right side cover lower right portion 101RD and the left side cover upper left portion 101LU and the right side cover upper right portion 101RU are respectively formed to be narrower in the vehicle width direction in comparison to the left side cover lower left portion 101 LD and the right side cover lower right portion 101RD, whereby, in addition to reducing the external force caused by the traveling wind received by the left and right shielding cover portions 101LDS, 101RDS, the movement of the front cover 101 can be restricted by the left and right reinforcement covers 103, 104. As a result, suppression of the shifting of the front cover 101 and the leg shield 102 can be further improved.
   Furthermore, in the straddled vehicle of the first embodiment, the left shielding cover portion 101LDS includes the left shielding cover recess portion 101LDSO which has the shape recessed toward the rear of the vehicle as seen in the vehicle left side view, and is arranged facing forward of the vehicle. The left reinforcement cover 103 is positioned further to the rear than the left shielding cover recess portion 101LDSO as seen in the vehicle left side view. The right shielding cover portion 101RDS includes the right shielding cover recess portion 101RDSO which has the shape recessed forward of the vehicle as seen in the vehicle right side view, and is arranged facing forward of the vehicle. The right reinforcement cover 104 is positioned further to the rear than the right shielding cover recess portion 104RDSO as seen in the vehicle right side view. That is, the left shielding cover portion 101LDS and the right shielding cover portion 101RDS are respectively formed on the left shielding cover recess portion 101LDSO and the right shielding cover recess portion 101RDSO and the effect of stopping the muddy water is improved with the left shielding cover recess portion 101LDSO and the right shielding cover recess portion 101 RDSO. As a result, the muddy water scattered by the movement of the front wheel 7 is less likely to be transmitted to the rear, and muddy water falling on the legs of the driver can be made more difficult. Therefore, even if the size of the left and right shielding cover portions 101LDS, 101RDS is not increased, the falling of the muddy water scattered by the movement of the front wheel 7 onto the legs of the driver can be sufficiently prevented. As indicated above, the shifting of the front cover 101 and the leg shield 102 can be sufficiently suppressed due to the design of the shapes of the left side cover 101L and the right side cover 101R and the installation positions of the left shielding cover 101LDS and the right shielding cover 101RDS, and due to the installation of the left and right reinforcement covers 103, 104. As a result, even when improving the shapes of the left and right shielding cover portions 101 LDS, 101RDS by respectively forming the left shielding cover recess portion 101LDSO and the right shielding cover recess portion 101RDSO on the left shielding cover portion 101LDS and the right shielding cover portion 101RDS so as to be able to further enhance the muddy water suppression effect, there is no concern with regard to the shifting of the front cover 101 and the leg shield 102.
   In this way, a straddled vehicle 1 can be provided that, at the same time, can resolve the issue of preventing muddy water scattered by the movement of the front wheel 7 from falling onto the legs of the driver and the issue of suppressing the shifting of the front cover 101 and the leg shield 102.
(2) In one preferred mode of the scooter type vehicle 1 of the present embodiment, the projected area of the left shielding cover portion 101 LDS as seen in the vehicle front view is larger than the projected area of the left shielding cover portion 101LDS as seen in the vehicle left side view. The projected area of the right shielding cover portion 101RDS as seen in the vehicle front view is larger than the projected area of the right shielding cover portion 101RDS as seen in the vehicle right side view.
   In this case, because the respective forward facing surface of the vehicle of the left shielding cover portion 101LDS and the right shielding cover portion 110RDS are large, the surface area for blocking the muddy water scattered by the movement of the front wheel 7 is large. As a result, the muddy water scattered by the movement of the front wheel 7 can be blocked and stopped on the left and right shielding cover portions 101LDS, 101RDS by the left shielding cover portion 101LDS and the right shielding cover portion 101RDS, whereby the falling of muddy water scattered by the movement of the front wheel 7 onto the legs of the driver can be further prevented.
(3) In addition, in one preferred mode of the scooter type vehicle 1 according to the present embodiment, the left shielding cover portion 101LDS is formed in a manner that the front edge portion 101LDSF thereof extends rearward and downward from the front of the vehicle as seen in the vehicle left side view. In addition, the right shielding cover portion 101RDS is formed in a manner that the front edge portion 101RDSF thereof extends rearward and downward from the front of the vehicle as seen in the vehicle right side view.
   In this case, the respective front surfaces of the left and right shielding cover portions 101LDS, 101RDS as seen in the respective vehicle side views are arranged facing forward and downward of the vehicle, whereby the muddy water scattered by the movement of the front wheel 7 can be easily blocked. As a result, the falling of muddy water scattered by the movement of the front wheel 7 onto the legs of the driver can be prevented even further. In addition, because the surface area impacted by the traveling wind is reduced, the external force caused by the traveling wind received by the left and right shielding cover portions 101LDS, 101RDS is reduced and shifting of the front cover 101 and the leg shield 102 is more difficult.
(4) In addition, in one preferred mode of the scooter type vehicle 1 according to the present embodiment, the left shielding cover recess portion 101LDSO of the left shielding cover portion 101LDS is arranged facing forward and downward of the vehicle. The right shielding cover recess portion 101RDSO of the right shielding cover portion 101RDS is arranged facing forward and downward of the vehicle.
   In this case, both of the left shielding cover recess portion 101LDSO of the left shielding cover portion 101LDS and the right shielding cover recess portion 101RDSO of the right shielding cover portion 101RDS are arranged facing forward and downward of the vehicle as seen in the respective vehicle side views, whereby the muddy water scattered by the movement of the front wheel 7 can be easily blocked. As a result, the falling of muddy water scattered by the movement of the front wheel 7 onto the legs of the driver can be prevented even further.
(5) In one preferred mode of the scooter type vehicle 1 of the present embodiment, the left side cover upper left portion 101LU includes the upper left upper surface portion 101LU1 that extends outward in the vehicle width direction as seen in the front view, and the upper left side surface portion 101LU2 that extends downward in the vehicle up-down direction from the outer end portion of the upper left upper surface portion 101LU1. The right side cover upper right portion 101RU includes the upper right upper surface portion 101RU1 that extends outward in the vehicle width direction as seen in the front view, and the upper right side surface portion 101RU2 that extends downward in the vehicle up-down direction from the outer end portion of the upper right upper surface portion 101RU1. The left supper side surface portion 101LU2 is positioned further to the right in the vehicle left-right direction than the lower left side surface portion 101LD2. The right supper side surface portion 101RU2 is positioned further to the left in the vehicle left-right direction than the lower right side surface portion 101RD2.
   In this case, the left side cover upper left portion 101LU is formed as a stepped shape so as to be recessed further to the inside in the vehicle width direction than the left side cover lower left portion 101LD, and the right side cover upper right portion 101RU is formed as a stepped shape so as to be recessed further to the inside in the vehicle width direction than the right side cover lower right portion 101RD. Consequently, the surface areas of the upper portions of the left and right side covers 101L, 101R impacted by the traveling wind can be reduced. Consequently, the external force caused by the traveling wind received by the left and right shielding cover portions 101LDS, 101RDS is further reduced and the suppression of the shifting of the front cover 101 and the leg shield 102 can be further improved. In addition, the coupling portions of the front cover 101 and the leg shield 102 are longer in comparison to a shape that is not stepped as seen in the vehicle front view, and the coupling rigidity between the front cover and the leg shield can be further ensured. As a result, suppression of the shifting of the front cover 101 and the leg shield 102 can be further improved.
(6) In addition, in one preferred mode of the scooter type vehicle 1 according to the present embodiment, the left reinforcement cover 103 is provided integrally with the leg shield 102. The right reinforcement cover 104 is provided integrally with the leg shield 102.
   In this case, the left and right reinforcement covers 103, 104 for suppressing the shifting of the front cover 101 and the leg shield 102 by restricting movement of the front cover 101, are provided on the leg shield 102, whereby the capacity for restricting the movement of the front cover 101 can be improved because the attachment rigidity of the left and right reinforcement covers 103, 104 themselves can be improved. As a result, shifting of the front cover 101 and the leg shield 102 can be further suppressed.
(7) In addition, in one preferred mode of the scooter type vehicle 1 according to the present embodiment, at least a portion of the front edge portion 101LDSF of the left shielding cover portion 101LDS is positioned further to the right in the vehicle left-right direction than the vertical line S3 that passes through the left end portion in the vehicle left-right direction of the fender cover 17 that is arranged above the front wheel 7. At least a portion of the front edge portion 101RDSF of the right shielding cover portion 101RDS is positioned further to the left in the vehicle left-right direction than the vertical line S4 that passes through the right end portion in the vehicle left-right direction of the fender cover 17.

In this case, at least portions of both the left shielding cover portion 101LDS and the right shielding cover portion 101RDS overlap the fender cover 17 as seen in the vehicle front view. Consequently, the muddy water scattered by the movement of the front wheel 7 can be blocked by thefender cover 17 in addition to the left shielding cover portion 101LDS and the right shielding cover portion 101RDS, whereby the flow of muddy water to the rear can be further suppressed. As a result, the falling of muddy water onto the legs of the driver can be prevented even further.

### (Modifications)

An embodiment has been explained up to this point. However, various modification may be made in order to provide further embodiments.

For example, in the embodiment, the seat 6 includes the sitting surface 6S1 on which the driver sits and the sitting surface 6S2 on which a rear seat passenger sits and the sitting surface 6S2 is arranged higher than the sitting surface 6S1. However, the sitting surface 6S2 may be arranged at the same height as the sitting surface 6S1. In addition, the seat 6 may only include sitting surface 6S1 on which the drivers sits.

In addition, the left side cover lower left portion 101LD in the embodiment includes the lower left upper surface portion 101LD1 of the left side cover lower left portion 101LD, the lower left side surface portion 101LD2 of the left side cover lower left portion 101LD, and the lower left coupling surface portion 101LD3 of the left side cover lower left portion 101LD. However, the left side cover lower left portion 101LD may not include the lower left upper surface portion 101LD1 of the left side cover lower left portion 101LD. While the right side cover lower right portion 101RD includes the lower right upper surface portion 101RD1 of the right side cover lower right portion 101RD, the lower right side surface portion 101RD2 of the right side cover lower right portion 101RD, and the lower right coupling surface portion 101RD3 of the right side cover lower right portion 101RD, the right side cover lower right portion 101RD may not include the lower right upper surface portion 101RD1 of the right side cover lower right portion 101RD.

In addition, while the lower left coupling surface portion 101LD3 of the left side cover lower left portion 101LD may be formed integrally with the upper left side surface portion 101LU2 of the left side cover upper left portion 101LU, the lower left coupling surface portion 101LD3 may be formed separately. While the lower right coupling surface portion 101RD3 of the right side cover lower right portion 101RD may be formed integrally with the upper right side surface portion 101RU2 of the right side cover upper right portion 101RU, the lower right coupling surface portion 101RD3 may be formed separately.

In addition, the shapes of the left side cover upper left portion 101LU, the right side cover upper right portion 101RU, and the right side cover lower right portion 101RD as seen in the front view are not limited to the shapes described in the embodiment. The right side cover lower right portion 101RD, that is, the upper left side surface portion 101LU2 of the left side cover upper left portion 101LU may be formed so as to extend downward in the vehicle up-down direction from the outer end portion of the upper left upper surface portion, or may be formed in a shape that bulges toward the left in the vehicle left-right direction as seen in the front view, or may be formed in a shape that is recessed toward the right in the vehicle left-right direction as seen in the front view. The upper right side surface portion 101RU2 of the right side cover upper right portion 101RU that is symmetrical to the upper left side surface portion 101LU2 of the left side cover upper left portion 101LU may be formed in the same way. The right side cover lower right portion 101RD and the left side cover upper left portion 101LU may be shaped so as to extend in a connected manner toward the left in the vehicle left-right direction and downward as seen in the front view. The right side cover upper right portion 101RU and the right side cover lower right portion 101RD may be shaped so as to extend continuously leftward in the vehicle left-right direction and downward as seen in the front view.

In addition, while the lower left upper surface portion 101LD1 of the left side cover lower left portion 101LD is formed so as to extend forwardand downward as seen in the vehicle left side view, the lower left upper surface portion 101LD1 is not limited in this way and may be formed so as to extend forward and upward or extend horizontally toward the front. In addition, the lower left upper surface portion 101LD1 of the left side cover lower left portion 101LD may be formed in a shape that bulges upward or in a shape that is recessed downward as seen in the vehicle left side view. The lower right upper surface portion 101RD1 of the right side cover lower right portion 101RD that is symmetrical to the lower left upper surface portion 101LD1 of the left side cover lower left portion 101LD may be shaped in the same way.

In addition, while the left shielding cover portion 101LDS is formed so that the front edge portion 101LDSF thereof extends rearward and downward from the front of the vehicle as seen in the vehicle left side view and the right shielding cover portion 101RDS is formed so that the front edge portion 101RDSF thereof extends rearward and downward from the front of the vehicle as seen in the vehicle right side view, the left shielding cover portion 101LDS and the right shielding cover portion 101RDS are not limited in this way and only the left shielding cover portion 101LDS may only include the left shielding cover recess portion 101LDSO that is arranged facing forward of the vehicle. That is, the front edge portion 101LDSF of the left shielding cover portion 101LDS may be formed so as to extend forward and downward from the rear of the vehicle, or may be formed so as to extend downward from the upward direction. The front edge portion 101RDSF of the right shielding cover portion 101RDS that is symmetrical to the front edge portion 101LDSF of the left shielding cover portion 101LDS may be shaped in the same way.

In addition, while the left shielding cover recess portion 101LDSO and the right shielding cover recess portion 101RDSO in the embodiment are arranged so as to face forward and downward of the vehicle, the portions are not limited in this way and may be arranged only to face forward of the vehicle. That is, the left shielding cover recess portion 101LDSO and the right shielding cover recess portion 101RDSO may be arranged so as to face directly forward of the vehicle.

In addition, the left reinforcement cover 103 and the right reinforcement cover 104 are provided on the leg shield 102 in the embodiment. More specifically, the left reinforcement cover 103 and the right reinforcement cover 104 may be provided integrally with the leg shield 102 or may be provided separately from the leg shield 102. In addition, although not limited in this way, the left reinforcement cover 103 and the right reinforcement cover 104 may not be provided on the leg shield 102.

In addition, while at least a portion of the front edge portion 101LDSF of the left shielding cover portion 101LDS is positioned further to the right in the vehicle left-right direction than the vertical line S3 that passes through the left end portion in the vehicle left-right direction of the fender cover 17 arranged above the front wheel 7 as seen in vehicle the front view, although not limited in this way, the entirety of front edge portion 101LDSF of the left shielding cover portion 101LDS may be positioned further to the left in the vehicle left-right direction than the vertical line S3. The right shielding cover portion 101RDS that is symmetrical to the left shielding cover portion 101LDS may be positioned in the same way.

In addition, the straddled vehicle according to the present teaching is not limited to two wheels and may include three or more wheels. For example, the straddled vehicle may include two front wheels and one rear wheel. The straddled vehicle is not limited to a scooter type vehicle and may be another type of automated two-wheel vehicle such as a sports type of a moped type. Alternatively, the straddled vehicle is not limited to a scooter type vehicle and may be another type of vehicle such as a four-wheel buggy such as an all-terrain vehicle (ATV). When the present teaching is applied to a motorized vehicle, the power unit may be a motor instead of an engine.

### List of Reference Numerals

- 1: Straddled vehicle
- 2: Vehicle body frame
- 3: Steering shaft
- 4: Front forks
- 5: Power unit
- 6: Seat
- 6S1: Sitting surface
- 6S2: Sitting surface
- 7: Front wheel
- 8: Handle
- 9: Rear wheel
- 10: Front cover unit
- 101: Front cover
- 1011: Inner cover
- 10111: Left front edge
- 10112: Right front edge
- 101U: Upper cover
- 101UU: Upper edge portion of upper cover
- 101UD: Lower edge portion of upper cover
- 101UR: Right edge portion of upper cover
- 101UL: Left edge portion of upper cover
- 101L: Left side cover
- 101LU: Left side cover upper left portion
- 101LU1: Upper left upper surface portion
- 101LU2: Upper left side surface portion
- 101LU3: Upper left coupling surface portion
- 101LUL: Left edge portion of left side cover upper left portion
- 101LULD: Lower end
- 101LD: Left side cover lower left portion
- 101LD1: Lower left upper surface portion
- 101LD2: Lower left side surface portion
- 101LD2F: Front edge of lower left side surface portion
- 101LD3: Lower left coupling surface portion
- 101LDO: Opening of left side cover lower left portion
- 101LDS: Left shielding cover portion
- 101LDSU: Upper edge portion of left shielding cover portion
- 101LDSD: Lower edge portion of left shielding cover portion
- 101LDSF: Front edge portion of left shielding cover portion
- 101LDSB: Rear edge portion of left shielding cover portion
- 101LDSO: Left shielding cover recess portion
- 101LDSO1: First rear surface of left shielding cover recess portion
- 101LDSO2: Second rear surface of left shielding cover recess portion
- 101R: Right side cover
- 101RU: Right side cover upper right portion
- 101RU1: Upper right upper surface portion
- 101RU2: Upper right side surface portion
- 101RD2F: Front edge of lower right side surface portion
- 101RU3: Upper right coupling surface portion
- 101RUR: Right edge portion of right side cover upper right portion
- 101RURD: Lower end
- 101RD: Right side cover lower right portion
- 101RD1: Lower right upper surface portion
- 101RD2: Lower right side surface portion
- 101RD3: Lower right coupling surface portion
- 101RDS: Right shielding cover portion
- 101RDSU: Upper edge portion of right shielding cover portion
- 101RDSD: Lower edge portion of right shielding cover portion
- 101RDSF: Front edge portion of right shielding cover portion
- 101RDSB: Rear edge portion of right shielding cover portion
- 101RDSO: Right shielding cover recess portion
- 101RDSO1: Rear surface
- 101UO: Opening
- 102: Leg shield
- 103: Left reinforcement cover
- 1030: Left reinforcement cover recess portion
- 10301: First front surface of left reinforcement cover recess portion
- 10302: Second front surface of left reinforcement cover recess portion
- 104: Right reinforcement cover
- 1040: Right reinforcement cover recess portion
- 10401: First front surface of right reinforcement cover recess portion
- 10402: Second front surface of right reinforcement cover recess portion
- 11: Rear cover
- 12: Lower cover
- 13: Footboard portion
- 14: Headlight
- 15: Left side sub-cover
- 16: Right side sub-cover
- 17: Fender cover
- 21: Head pipe
- 22: Down frame
- 23: Lower frame
- 24: Rear frame
- 901: Straddled vehicle
- 902: Head pipe
- 905: Front wheel
- 906: Seat
- 913: Front cover unit
- 915: Front cover
- 916: Leg shield
- 919: Footboard
- 932: Leg shield
- 934: Front cover
- 935: Upper side cover
- 936: Inner cover
- 937: Left side cover
- 938: Right side cover
- S1: Vertical line
- S2: Vertical line
- S3: Vertical line
- S4: Vertical line
- S5: Horizontal line
- H: Virtual horizontal line
- H': Virtual horizontal line

## Claims

1. A straddled vehicle (1) comprising:
a head pipe (21);
a pair of left and right front forks (4) rotatably provided to the head pipe (21);
a front wheel (7) rotatably supported by the pair of left and right front forks (4);
a seat (6) arranged further a rear of the vehicle with regards to a vehicle front-back direction than the head pipe (21) and including a sitting surface (6S1) configured for a driver to sit on;
a front cover unit (10) arranged further to a front of the vehicle with regards to the vehicle front-back direction than the seat (6); wherein
the front cover unit (10) includes a leg shield (102) arranged further to the rear of the vehicle than the head pipe (21), a front cover (101) arranged further to the front of the vehicle than the leg shield (102) and connected to the leg shield (102), a left reinforcement cover (103), and a right reinforcement cover (104);
the front cover (101) includes an upper cover (101U) arranged further to the front of the vehicle than the head pipe (21) and above the front wheel (7) as seen in the vehicle front view, an inner cover (1011) arranged below, with regards to a vehicle up-down direction, the upper cover (101U) and further to the rear of the vehicle than the front wheel (7) and connected to a lower edge portion (101UD) of the upper cover (101U), a left side cover (101L) arranged further to a left of the vehicle with regards to a vehicle left-right direction than the front wheel (7) as seen in the vehicle front view and connected to a left edge portion (101UL) of the upper cover (101U), and a right side cover (101R) arranged further to a right of the vehicle with regards to the vehicle left-right direction than the front wheel (7) as seen in the vehicle front view and connected to a right edge portion (101UR) of the upper cover (101U);
the left side cover (101L) includes a left side cover upper left portion (101LU) that is positioned above, with regards to the vehicle up-down direction, a virtual horizontal line (H) that passes through the sitting surface (6S1) of the seat (6) as seen in the vehicle left side view, and a left side cover lower left portion (101LD) that is positioned below the virtual horizontal line (H) as seen in the vehicle left side view;
the left side cover lower left portion (101LD) includes a lower left upper surface portion (101LD1) that extends further to a outside with regards to a the vehicle width direction than a lower end of a left edge portion of the left side cover upper left portion (101LU) as seen in the vehicle front view, and a lower left side surface portion (101LD2) that extends downward in the vehicle up-down direction from an outer end portion of the lower left upper surface portion (101LD1) as seen in the vehicle front view;
the right side cover (101R) includes a right side cover upper right portion (101RU) that is positioned above the virtual horizontal line (H) that passes through the sitting surface (6S1) of the seat (6) as seen in the vehicle right side view, and a right side cover lower right portion (101RD) that is positioned below the virtual horizontal line (H) as seen in the vehicle right side view;
the right side cover lower right portion (101RD) includes a lower right upper surface portion (101RD1) that extends further to the outside in the vehicle width direction than a lower end of a right edge portion (101RUR) of the right side cover upper right portion (101RU) as seen in the vehicle front view, and a lower right side surface portion (101RD2) that extends downward with regards to the vehicle up-down direction from an outer end portion of the lower right upper surface portion (101RD1) as seen in the vehicle front view;
the left side cover lower left portion (101LD) further includes a left shielding cover portion (101LDS) at least a portion of which is positioned further to the left of the vehicle in the vehicle left-right direction than a left edge portion of the left side cover upper left portion (101LU), and the right side cover lower right portion (101RD) further includes a right shielding cover portion (101RDS) at least a portion of which is positioned further to the right of the vehicle in the vehicle left-right direction than a right edge portion (101RUR) of the right side cover upper right portion (101RU);
the left shielding cover portion (101LDS) includes a left shielding cover recess portion (101LDSO) which has the shape recessed toward the rear of the vehicle of the vehicle as seen in the vehicle left side view, and is arranged facing forward of the vehicle;
the right shielding cover portion (101RDS) includes a right shielding cover recess portion (101 RDSO) which has the shape recessed toward the rear of the vehicle as seen in the vehicle right side view, and is arranged facing forward of the vehicle;
the left reinforcement cover (103) is arranged separately from the front cover (101) and is positioned further to the left of the vehicle in the vehicle left-right direction than a left edge portion (101LUL) of the left side cover upper left portion (101LU);
the right reinforcement cover (104) is arranged separately from the front cover (101) and is positioned further to the right of the vehicle in the vehicle left-right direction than a right edge portion (101RUR) of the right side cover upper right portion (101RU);
the left reinforcement cover (103) includes a left reinforcement cover recess portion (103O) that is positioned further to the rear of the vehicle than the left shielding cover recess portion (101LDSO) as seen in the vehicle left side view and that is recessed toward the front of the vehicle as seen in the vehicle left side view, and at least a portion of the left reinforcement cover recess portion (1030) overlaps the left side cover lower left portion (101LD) as seen in the vehicle plan view and at least a portion of the left reinforcement cover recess portion (1030) overlaps the left side cover lower left portion (101LD) as seen in the vehicle left side view; and
the right reinforcement cover (104) includes a right reinforcement cover recess portion (1040) that is positioned further to the rear of the vehicle than the right shielding cover recess portion (101 RDSO) as seen in the vehicle right side view and that is recessed toward the front of the vehicle as seen in the vehicle right side view, and at least a portion of the right reinforcement cover recess portion (1040) overlaps the right side cover lower right portion (101RD) as seen in the vehicle plan view and at least a portion of the right reinforcement cover recess portion (1040) overlaps the right side cover lower right portion (101RD) as seen in the vehicle right side view.

2. The straddled vehicle (1) according to claim 1, wherein a projected area of the left shielding cover portion (101LDS) as seen in the vehicle front view is greater than a projected area of the left shielding cover portion (101LDS) as seen in the vehicle left side view, and
a projected area of the right shielding cover portion (101RDS) as seen in the vehicle front view is greater than a projected area of the right shielding cover portion (101RDS) as seen in the vehicle right side view.

3. The straddled vehicle (1) according to claim 1 or 2, wherein the left shielding cover portion (101LDS) is formed in a manner that a front edge portion (101 LDSF) thereof extends rearward with regards to the vehicle front-back direction, and downward from the front of the vehicle as seen in the vehicle left side view, and
the right shielding cover portion (101RDS) is formed in a manner that a front edge portion (101RDSF) thereof extends rearward and downward from the front of the vehicle as seen in the vehicle right side view.

4. The straddled vehicle (1) according to at least one of the claims 1 to 3, wherein the left shielding cover recess portion (101LDSO) of the left shielding cover portion (101LDS) is arranged facing forward and downward of the vehicle, and
the right shielding cover recess portion (101 RDSO) of the right shielding cover portion (101 RDS) is arranged facing forward and downward of the vehicle.

5. The straddled vehicle (1) according to at least one of the claims 1 to 4, wherein the left side cover upper left portion (101LU) includes an upper left upper surface portion (101LU1) that extends outward in the vehicle width direction as seen in the front view, and an upper left side surface portion (101LU2) that extends downward in the vehicle up-down direction from an outer end portion of the upper left upper surface portion (101LU1), and
the right side cover upper right portion (101RU) includes an upper right upper surface portion (101RU1) that extends outward in the vehicle width direction as seen in the front view, and an upper right side surface portion (101RU2) that extends downward in the vehicle up-down direction from an outer end portion of the upper right upper surface portion (101RU1), and
the upper left side surface portion (101LU2) is positioned further to the right of the vehicle in the vehicle left-right direction than the lower left side surface portion (101 LD2), and the upper right side surface portion (101RU2) is positioned further to the left of the vehicle in the vehicle left-right direction than the lower right side surface portion (101RD2).

6. The straddled vehicle (1) according to at least one of the claims 1 to 5, wherein the left reinforcement cover (103) is provided on the leg shield (102), and
the right reinforcement cover (104) is provided on the leg shield (102).

7. The straddled vehicle (1) according to at least one of the claims 1 to 6, wherein at least a portion of the front edge portion of the left shielding cover portion (101LDSF) is positioned further to the right of the vehicle in the vehicle left-right direction than a vertical line (S3) that passes through a left end portion in the vehicle left-right direction of a fender cover (17) arranged above the front wheel (7) as seen in the vehicle front view, and
at least a portion of the front edge portion of the right shielding cover portion (101RDS) is positioned further to the left of the vehicle in the vehicle left-right direction than a vertical line (S4) that passes through a right end portion in the vehicle left-right direction of the fender cover (17) as seen in the vehicle front view.
